(19) Europäisches Patentamt / European Patent Office / Office européen des brevets

(11) **EP 4 568 235 A1**

(12) **EUROPEAN PATENT APPLICATION**

(43) Date of publication:
**11.06.2025 Bulletin 2025/24**

(21) Application number: **23214769.4**

(22) Date of filing: **06.12.2023**

(51) International Patent Classification (IPC):
$H04N\ 1/56^{(2006.01)}$    $H04N\ 1/60^{(2006.01)}$
$G09G\ 5/02^{(2006.01)}$    $G06T\ 5/90^{(2024.01)}$
$G09G\ 5/10^{(2006.01)}$    $H04N\ 1/64^{(2006.01)}$
$H04N\ 9/68^{(2023.01)}$    $H04N\ 19/00^{(2014.01)}$
$H04N\ 19/46^{(2014.01)}$    $H04N\ 21/84^{(2011.01)}$

(52) Cooperative Patent Classification (CPC):
**G09G 5/10; H04N 9/68; H04N 9/69;** G09G 5/02;
G09G 2320/0271; G09G 2320/0686;
G09G 2340/0428; G09G 2340/06; H04N 1/6027;
H04N 1/6058

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Koninklijke Philips N.V.**
**5656 AG Eindhoven (NL)**

(72) Inventor: **BERENDSE, Danny**
**5656 AG Eindhoven (NL)**

(74) Representative: **Philips Intellectual Property &
Standards**
**High Tech Campus 52**
**5656 AG Eindhoven (NL)**

(54) **HDR RANGE ADAPTATION LUMINANCE PROCESSING ON COMPUTERS**

(57) To allow controlled display of various visual assets of different brightness dynamic range, a computer (700) runs at least one primary software application (701), in which the primary software application is arranged to present for display visual assets of different brightness range, wherein the primary software application presents a first visual asset (702) which comprises pixels which have brightnesses lying within a first brightness range (DR_H);

wherein the primary software application comprises a luma mapping (704) arranged to map a first color code triplet (RGB1) which codes a first brightness of a pixel (7201) to a corresponding second color code triplet (RGB2) which codes a second brightness for said pixel, by applying one or more primary mapping functions (F_Y) to the first color code triplet yielding the second color code triplet, wherein the second brightness is a brightness lying in a second brightness range (DR_L) of different size than the first brightness range;

wherein the primary software application comprises a formatting (707) arranged to compose secondary color code triplets (RGB2) from the luma mapping into a first image data structure (IMDAT) for communicating to a secondary software (720), and communicate to the secondary software (720) the first image data structure (IMDAT) together with a coding of the one or more primary mapping functions (F_Y) and a coding of a spatial region (REG1) of applicability of the one or more primary mapping functions (F_Y);

wherein the primary software application comprises a primary controller (710) arranged to output a pass-through control signal (C_PT) instructing to a secondary controller (722) in the secondary software (720) that the one or more primary mapping functions (F_Y), or one or more derived mapping functions (F_Y*) which are based on the one or more primary mapping functions (F_Y), should be passed to a tertiary software (740), which tertiary software is in control of supplying final pixel colors for a scanout buffer (511) of a graphics processing unit GPU (510), and wherein the tertiary software is arranged to pass the one or more primary mapping functions (F_Y) respectively one or more derived mapping functions (F_Y*) to the GPU.

Fig. 7

**Description**

FIELD OF THE INVENTION

The invention relates to coordinating the brightnesses of pixels in various visual assets for display, in particular specifically for computer environments, and in particular where a windowing system can coordinate the various visual assests on a total canvas to be loaded in a scanout buffer of a Graphics Processing Unit (GPU), before displaying on one or more connected display screens (e.g. by using screen extension, or screen duplication), which display screens may have different maximum displayable luminance capabilities, and in particular if at least one of the displays is a high dynamic range display.

BACKGROUND OF THE INVENTION

For more than half a century, an image representation/coding technology which is now called **Low Dynamic Range (LDR)** or. **Standard Dynamic Range (SDR)** worked perfectly fine for creating, communicating and displaying electronic images such as videos (i.e. temporally successive sequences of images). Colorimetrically, i.e. regarding the specification of the pixel colors, it was based on the technology which already worked fine decades before for photographic materials and paintings: one merely needed to be able to define, and display, most of the colors projecting out of an axis of achromatic colors (a.k.a. greys) which spans from black at the bottom end to the brightest achromatic color giving the impression to the viewer of being white. For television communication, which relies on a additive color creation mechanism at the display side, a triplet of red, green and blue color components needed to be communicated for each position on the display screen (pixel), since with a suitably proportioned triplet (e.g. 60%, 30%, 25%) one can make almost all colors, and in practice all needed colors (white being obtained by driving the three display channels to their maximum, with driving signal Rmax=Crmax=Bmax).

The earliest television standards (NTSC, PAL) communicated the color components as three voltage signals (which defined the amount of a color component between 0 and 700mV), where the time positions along the voltage signal corresponded by using a scan path with pixels on the screen.

The control signals generated at the creation side, <u>directly instructed what the display should make as proportion</u> (apart from their being an accidental fixed gamma pre-correction at the transmitter, because the physics of the cathode ray tube took approximately a square power of the input voltage, which would have made the dark colors much blacker than they were intended e.g. as seen by a camera) at the creation side). So a 60%, 30%, 25% color (which is a dark red) in the scene being captured, would look substantially similar on the display, since it would be re-generated as a 60%, 30%, 25% color (note that the absolute brightness didn't matter much, since the eye of the viewer would adapt to the white and the average brightness of the colors being displayed on the screen). One can call this "direct link driving", without further color processing (except for arbitrary and unnecessary processing a display maker might still perform to e.g. make his sky look more blue-ish). For reasons of backwards compatibility with the older black and white television broadcasts, instead of actually communicating a red, green and blue voltage signal, a brightness signal and two color difference signals called chroma were transmitted (in current nomenclature the blue chroma Cb, and the red Cr). The relationship between RGB and YCbCr is an easy one, namely they can be calculated into each other by using a simple fixed 3x3 matrix (the coefficients of which depend on the emission spectra of the three primaries, and are standardized, i.e. also to be emulated electronically internally by LCDs which actually may have different optical characteristics, so that from image communication point of view all SDR displays are alike).

These voltage signals were later for digital television (MPEG-based et al.) digitized, as prescribed in standard Rec. 709, and one defined the various amounts of e.g. the brightness component with an 8 bit code word, 0 coding for the darkest color (i.e. black), and 255 for white. Note that coded video signals need not be compressed in all situations (although they oftentimes are). In case they are we will use the wording <u>compression</u> (e.g. by MPEG-HEVC, AV1 etc.), not to be confused with the act of compressing colors in a smaller gamut respectively range. With <u>brightness</u> we mean the part of the color definition that will impact upon the colors (to be) displayed the visual property of being darker respectively brighter. In the light of the present technologies, it is important to correctly understand that there can be two kinds of brightnesses: relative brightness (as a percentage of something, which may be undefined until a choice is made, e.g. by the consumer buying a certain display, and setting its brightness setting to e.g. 120%, which will make e.g. the backlight emit a certain amount of light, and so also the white and colored pixels), and on the other hand absolute brightness. The latter can be characterized by the universal physical quantity <u>luminance</u> (which is measured technically in the unit <u>nit</u>, which is also candela per square meter). The luminance can be stated as an amount of photons coming out of a patch on an object, such as a pixel on the screen, towards the eye (and it is related to the lighting concept of illuminance, since such patch will receive a certain illuminance, and send some fraction of it towards the viewer).

Recently two unrelated technologies have emerged, which only came together because people argued that one might as well in one go improve the visual quality of images on all aspects, but those two technologies have quite different technical aspects.

On the one hand there was a strive towards <u>wide gamut</u> image technology. It can be shown that only colors can be made which lie within the triangle spanned by the red, green and blue primaries, and nothing outside. But one chose primaries (originally phosphors for the CRT, later color filters in the LCD, etc.) which lay relatively close to the spectral locus of all existing colors, so one could make sufficiently saturated colors (saturation specifies how far away a color lies from the achromatic colors, i.e. how much "color" there is). However, recently one wanted to be able to use novel displays with <u>more saturated primaries</u> (e.g. DCI_P3, or Rec. 2020), so that one also needed to be able to represent colors in such wider color spaces (a <u>color space</u> is the mathematical 3D space to represent colors (as geometric positions of coordinate numbers), the base of which being defined by the 3 primaries; for the technical discussion we may better use the word <u>color gamut,</u> which is the set of all colors that can be technically defined or displayed (i.e. a space may be e.g. a 3D coordinate system going to infinity whereas the gamut may be a cube of some size in that space); for the brightness aspect only, be will talk about brightness or luminance <u>range</u> (more commonly worded as "<u>dynamic range</u>", spanning from some minimum brightness to its maximum brightness). The present technologies will not primarily be about <u>chromatic</u> (i.e. color per se, such as more specifically its saturation) aspects, but rather about brightness aspects, so the chromatic aspects will only be mentioned to the extent needed for the relevant embodiments.

A more important new technology is **High Dynamic Range (HDR).** This should not be construed as "exactly this high" (since there can be many variants of HDR representations, with successively higher range maximum), but rather as "higher than the reference/legacy representation: SDR". Since there are new coding concepts needed, one may also discriminate HDR from SDR by aspects from the technical details of the representation, e.g. the video signal. One difference of absolute HDR systems is that they define a unique luminance for each image pixel (e.g. a pixel in an image object being a white dog in the sun may be 550 nit), where SDR signals only had relative brightness definitions (so the dog would happen look e.g. 75 nit (corresponding to 94%) on somebody's computer monitor which could maximally show 80 nit, but it would display at 234 nit on a 250 nit SDR <u>display</u> (yet the viewer would not typically see any difference in the look of the image, unless having those displays side by side). The reader should not confuse luminances as they exist (ultimately) at the front of any display, with <u>luminances as are defined (i.e. establishable) on an image signal itself,</u> i.e. even when that is stored but not displayed. Other differences are metadata that any flavor of HDR signal may have, but not the SDR signal.

Colorimetrically, HDR images can represent brighter colors than SDR images, so in particular brighter than white colors (glowing whites e.g.). Or in other words, the dynamic range will be larger. The SDR <u>signal</u> can represent a dynamic range of 1000:1 (how much dynamic range is actual visible when displaying, will depend inter alia on the amount of surround light reflecting on the front of the display). So if one wants to represent e.g. 10,000:1, one must resort to making a new HDR image format definition (we may in general use the word <u>signal</u> if the image representation is being or to be communicated rather than e.g. merely existing in the creating IC, and in general signaling will also have its own formatting and packaging, and may employ further techniques depending on the communication mechanism such as modulation).

Depending on the situation, the human eye can easily see (even if all on a screen in front corresponding to a small glare angle) 100,000:1 (e.g. 10,000 nit maximum and 0.1 minimum, which is a good black for television home viewing, i.e. in a dim room which only support lighting of a relatively low level, such as in the evening). However, it is not necessary that all <u>images as created by a creative</u> go as high: (s)he may elect to make the brightest image pixel in an image or the video e.g. 1000 nit.

The luminance of SDR white <u>for videos</u> (a.k.a. the <u>SDR White Point Luminance (WP) or maximum luminance (ML)),</u> is standardized to be 100 nit (not to be confused with the reference luminance of white text in 1000 nit <u>HDR images</u> being 200 nit). I.e., a 1000 nit ML HDR image representation can make up to 10x brighter (glowing) object colors. What one can make with this are e.g. specular reflections on metals, such as a boundary of a metal window frame: in SDR the luminance has to end at 100 nit, making them visually on slightly brighter than the e.g. 70 nit light gray colors of the part of the window frame that does not specularly reflect. In HDR one can make those pixels that reflect the light source to the eye e.g. 900 nit, making them glow nicely giving a naturalistic look to the image as if it were a real scene. The same can be done with fire balls, light bulbs, etc. This regards the definition of images; how a display which can only display whites as bright as 650 nit (the display maximum luminance ML_D) is to actually display the images is an entirely different matter, namely one of **display adaptation a.k.a. display tuning,** not of image (de)coding. Also the relationship with how a camera captures HDR scene colors may be tight or lose: we will in general assume that HDR colors have already been defined in the HDR image when talking about such technologies as coding, communication, dynamic range conversion and the like. In fact, the original camera-captured colors or specifically their luminances may have been changed into different values by e.g. a <u>human color grader</u> (who defines the ultimate look of an image, i.e. which color triplet values each pixel color of the image(s) should have), or some automatic algorithm. So already for the fact that the chromatic gamut size may stretch with less than a factor 2, whereas the brightness range e.g. luminance range may stretch by a factor 100, one expects different technical rationales and solutions for the two improvement technologies.

A HDR image may be associated with a metadatum called <u>mastering display white point luminance (MDWPL),</u> <u>a.k.a. ML_V.</u> This value, which is typically communicated in metadata of the signal, and is a characterizer of the HDR video images (rather than of a specific display, as it is an element of a virtual display associated specifically with the video, being some ideal intended display for which the video pixel colors have been optimized to be conforming). This is an electable parameter of the video, which can be contemplated as similar to the election of the painting canvas aspect ratio by a painter: first the painter chooses an appropriate AR, e.g. 4:1 for painting a landscape, or 1:1 when he wants to make a still life, and thereafter he starts to optimally position all his objects in that elected painting canvas. In an HDR image the creator will then, after having established that the MDWPL is e.g. 5000 nit, make his secondary elections that in a specific scene this lamp shade should be at 700 nit, the flames in the hearth distributed around 500 nit, etc.

The primary visual aspect of HDR images is (since the blacks are more tricky) the additional bright colors (so one can define ranges with only a MDWPL value, if one assumes the bottom luminance to be fixed to e.g. 0.1 nit). However, HDR image creation can also involve deeper blacks, up to as deep as e.g. 0.0001 nit (although that is mostly relevant for dark viewing environments, such as in cinema theatres).

The other objects, e.g. the objects which merely reflect the scene light, will be coordinated to be e.g. at least 40x darker in a 5000 nit MDWPL graded video, and e.g. at least 20x darker in a 2000 nit video, etc. So the distribution of all image pixel luminances will typically depend on the MDWPL value (not making most of the pixels very bright).

The digital coding of the brightness, involves a technical quantity called luma (Y). We will give luminances the letter L, and (relative) brightnesses the letter B. Note that technically, e.g. for ease of definition of some operations, one can always normalize even 5000 nit WPDPL range luminances to the normalized range [0,1], but that doesn't detract from the fact that these normalized luminances still represent absolute luminances on a range ending at 5000 nit (in contrast to relative brightnesses that never had any clear associated absolute luminance value, and can only be converted to luminances ad hoc, typically with some arbitrary value).

For SDR signals the luma coding used a so-called Opto-electronic Transfer Function (OETF), between the optical brightnesses and the electronic typically 8 bit luma codes which by definition was:

$$Y\_float = sqrt\,(B\_relative).$$

If B_relative is a float number ranging from 0 to 1.0, so will Y_float.

Subsequently that signal value Y_float is quantized, because we want 8 bit digital representations, ergo, the Y_dig value that is communicated to receivers over e.g. airways DVB (or internet-supplied video on demand, or blu-ray disk, etc.) has a value between 0 and 255 (i.e. power(2;8)-1).

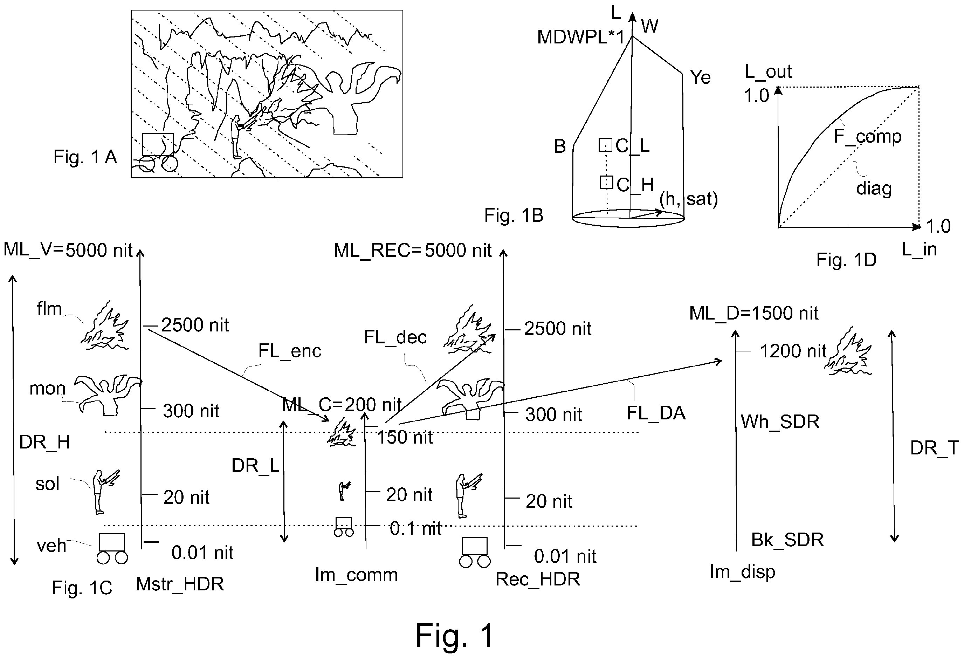

One can show the gamut of all SDR colors (or similarly one can show gamuts of HDR colors, which would if using the same RGB primaries defining the chromatic gamut have the same base, but after renormalization stretch vertically to a larger absolute gamut solid) as in **Fig. 1B.** Larger Cb and Cr values will lead to a (psychovisually more relevant color characterizer) larger saturation (sat), which moves outwards from the unsaturated or colorless colors vertical axis showing the achromatic colors in the middle, towards the maximally saturated colors on the circle (which is a transformation of the usual color triangle spanned by the RGB primaries as vertices). Hues h (i.e. the color category, yellows, versus greens, versus blues) will be angles along the circle. The vertical axis represents normalized luminances (in a linear gamut representation), or normalized lumas (in a non-linear representation (coding) of those luminances, e.g via a psychovisually uniformized OETF or its inverse the EOTF). Since after normalization (i.e. division by the respective MDWPL values, e.g. 2000 for an HDR image of a particular video and 100 for an SDR image), the common representation will become easy, and one can define luminance (or luma) mapping functions on normalized axes as shown in **Fig. 1D** (i.e. which function F_comp re-distributes the various image object pixel values as needed, so that in the actual luminance representation e.g. a dark object looks the same, i.e. has the same luminance, but a different normalized luminance since in one situation a pixel normalized luminance will get multiplied by 100 and in the other situation by 2000, so to get the same end luminance the latter pixel should have a normalized luminance of 1/20$^{th}$ of the former). When down-grading to a smaller range of luminances, one will typically get (in the normalized to 1.0 representation, i.e. mapping a range of normalized input luminances L_in between zero and one to normalized output luminances L_out) a convex function which everywhere lies above the diagonal diag, but the exact shape of that function F_comp, e.g. how fact it has to rise at the blacks, will depend typically not only on the two MDWPL values, but (to have the most perfect re-grading technology version) also on the scene contents of various (video or still) images, e.g. whether the scene is a dark cave, and there is action happening in a shadowy area, which must still be reasonably visible even on 100 nit luminance ranges (hence the strong boost of the blacks for such a scenario, compared to a daylight scene which may employ a near linear function almost overlapping with the diagonal).

In the representation of Fig. 1B one can show the mapping from a HDR color (C_H) to an LDR color (C_L) of a pixel as a vertical shift (assuming that both colors should have the same proper color, i.e. hue and saturation, which usually is the desired technical requirement, i.e. on the circular ground plane they will project to the same point). Ye means the color yellow, and its complementary color on the opposite side of the achromatic axis of luminances (or lumas) is blue (B), and W signifies white (the brightest color in the gamut a.k.a. the white point of the gamut, with the darkest colors, the blacks being at the bottom).

So the receiving side (in the old days, or today) will know it has an SDR video, if it gets this format. The maximum white (of SDR) will be by definition the brightest color that SDR can define. So if one now wants to make brighter image colors (e.g of real luminous lamps), that should be done with a different codec (as one can show the math of the Rec. 709 OETF allows only a coding of up to 1000:1 and no more).

So one defined new frameworks with <u>different code allocation functions</u> (EOTFs, or OETFs). What is of interest here is primarily the definition of the luma codes.

For reasons beyond what is needed for the present discussion, most HDR codecs start by defining an Electro-optical transfer function instead of its inverse, the OETF. Then one can at least basically define brighter (and darker) colors. That as such is not enough for a professional HDR coding system, since because it is different from SDR, and there are even various flavors, one wants more (new compared to SDR coding) technical information relating to the HDR images, which will be metadata.

The property of those HDR EOTFs is that they are much steeper, to encode a much larger range of needed to be coded HDR luminances, and a significant part of that range coding specifically darker colors (relatively darker, since although one may be coding absolute luminances with e.g. the <u>Perceptual Quantizer (PQ) EOTF (standardized in SMPTE 2084),</u> one applies the function after normalization). In fact if one were to use exact power functions as EOTFs for coding HDR luminances as HDR lumas, one would have a power of 4, or even 7. When a receiver gets a <u>video image signal defined by such an EOTF</u> (e.g. Perceptual Quantizer) it will know it gets a HDR video. It will need the EOTF to be able to decode the pixel lumas in the plane of lumas spanning the image (i.e. having a width of e.g. 4000 pixels and a height of 2000), which will simply be binary numbers. Typically HDR images will also have a larger word length, e.g. 10 bit. However, one should not confuse the non-linear coding one can at will design by optimizing a non-linear EOTF shape with linear codings and the amount of bits needed for them. If one needs to drive, with a <u>linear (bit-represented) code,</u> e.g. a DMD pixel, indeed to reach e.g. 10000:1 modulation darkest to brightest, one needs to take the log2 to obtain the number of bits. There one would need to have at least 14 bits (which may for technical reasons get rounded upwards to 16 bits), since power(2;14)= 16384 > 10000. But being able to smartly design the shape of the EOTF, and knowing that the visual system sees not all luminance differences equally, the present applicant has shown that (surprisingly) quite reasonable HDR television signals can be communicated with only 8 bit per pixel color component (of course if technically achievable in a system, 10 bits may be better and more preferable). So the receiving side may in both situations get as input a coded pixel color (luma and Cb, Cr; or in some systems by matrixing equivalent non-linear R'G'B' component values) which lie between 0 and 255, or 0 and 1023, but it will know the kind of signal it is getting (hence what ought to be displayed) from the metadata, such as the metadata (e.g. MPEG VUI metadata) co-communicated EOTF (e.g. a value 16 meaning PQ; 18 means another OETF was used to create the lumas, namely the Hybrid LogGamma OETF, ergo the <u>inverse</u> of that function should be used to decode the luma plane), in many HDR codings the MDWPL value (e.g. 2000 nit), and in more advanced HDR codings further metadata (some may e.g. co-encode luminance -or luma- mapping functions to apply for mapping image luminances from a primary luminance dynamic range to a secondary luminance dynamic range, such as one function FL_enc per image).

We detail the typical needs of an already more sophisticated HDR image handling chain with the aid of simple elucidation **Fig. 1** (for a typical nice HDR scene image, of a monster being fought in a cave with a flame thrower, the **master grading** (Mstr_HDR) of which is shown <u>spatially</u> in Fig. 1A, and the range of occurring pixel luminances on the left of Fig. 1C). The master grading or master graded image is where the image creator can make his image look as impressive (e.g. realistic) as desired. E.g., in a Christmas movie he can make a baker's shop window look somewhat illuminated by making the yellow walls somewhat brighter than paper white, e.g. 150 nit (and real colorful yellow instead of pale yellow), and the light bulbs can be made 900 nit (which will give a really lit Christmas-like look to the image, instead of a dull one in which all lights are clipped white, and not much more bright than the rest of the image objects, such as the green of the Christmas tree).

So the basic thing one must be able to do is encode (and typically also decode and display) brighter image objects than in a typical SDR image.

Let's look at it colorimetrically now. SDR (and its coding and signaling) was designed to be able to <u>communicate any Lambertian reflecting color</u> (i.e. a typical object, like your blue jeans pants, which absorbs some of the infalling light, e.g. the red and green wavelengths, to emit only blue light to the viewer or capturing camera) under good <u>uniform lighting</u> (of the scene where the action is camera-captured). Just like we would do on a painting: if we don't add paint we get the full brightness reflecting back from the <u>white</u> painting canvas, and if we add a thick layer of strongly absorbing paint we will see a black stroke or dot. We can represent all colors brighter than blackest black and darker than white in a so-called color gamut of representable colors, as in Fig. 1B (the "tent"). As a bottom plane, we have a circle of all representable <u>chromaticities</u> (note that one can have long discussions that in a typical RGB system this should be a triangle, but those details are beyond the needs of the present teachings). A chromaticity is composed of a certain (rotation angle) hue h (e.g. bluish-green e.g. "teal"), and a saturation sat, which is the amount of pure color mixed in a grey, e.g. the distance from the vertical axis in the middle which represents all achromatic colors from black at the bottom becoming increasingly bright till we arrive at white. Chromatic colors, e.g. a half-saturated purple, can also have a brightness, the same color being somewhat darker or brighter. However, the brightest color in an additive system can only be (colorless) white, since it is made by setting all color channels to maximum R=G=B=255, ergo, there is no unbalance which would make the color clearly red (there is still a little bit of bluishness respectively yellowishness in the elected white point chromaticity, but that is also an unnecessary further discussion, we will assume D65 daylight white). We can define those SDR colors by setting MDWPL a (relative) 100% for white W (n.b., in SDR white does not actually have a luminance, since legacy SDR does not have a luminance associated with the image, but we can pretend it to be X nit, e.g. typically 100 nit, which is good average representative value of the various legacy SDR tv's).

Now we want to represent brighter than Lambertian colors, e.g. the self-luminous flame object (flm) of the flame thrower of the soldier (sol) fighting the monster (mon) in this dark cave.

Let's say we define a (video maximum luminance ML_V) 5000 nit master HDR grading (master means the starting image -most important in this case best quality grading- which we will optimally grade first, to define the look of this HDR scene image, and from which we can derive secondary gradings a.k.a. graded images as needed). We will for simplicity talk about what happens to (universal) luminances, then we can for now leave the debate about the corresponding luma codes out of the discussion, and indeed PQ can code between 1/10,000 nit and 10,000 nit, so there is no problem communicating those graded pixel luminances as a e.g. 10 bit per component YCbCr pixelized HDR image, if coding according to that PQ EOTF (of course, the mappings can also be represented, and e.g. implemented in the processing IC units, as an equivalent luma mapping).

The two dotted horizontal lines represent the limitations of the SDR codable image, when associating 100 nit with the 100% of SDR white.

Although in a cave, the monster will be strongly illuminated by the light of the flames, so we will give it an (average) luminance of 300 nit (with some spread, due to the square power law of light dimming, skin texture, etc.).

The soldier may be 20 nit, since that is a nicely slightly dark value, still giving some good basic visibility.

A vehicle (veh) may be hidden in some shadowy corner, and therefore in a archetypical good impact HDR scene of a cave e.g. have a luminance of 0.01 nit. The flames one may want to make impressively bright (though not too exaggerated). On an available 5000 nit HDR range, we could elect 2500 nit, around which we could still gradually make some darker and brighter parts, but all nicely colorful (yellow and maybe some oranges).

What would now happen in a typical SDR representation, e.g. a straight from camera SDR image capturing?

The camera operator would open his iris so that the soldier comes out at "20 nit", or in fact more precisely 20%. Since the flames are much brighter (note: we didn't actually show the real world scene luminances, since master HDR video Mstr_HDR is already an optimal grading to have best impact in a typical living room viewing scenario, but also in the real world the flames would be quite brighter than the soldier, and certainly the vehicle), they would all clip to maximum white. So we would see a bright area, without any details, and also not yellow, since yellow must have a lower luminance (of course the cinematographer may optimize things so that there is still somewhat of a flame visible even in LDR, but then that is firstly never as impactful extra bright, and secondly at the detriment of the other objects which must become darker).

The same would also happen if we built a SDR (max. 100 nit) TV which would map equi-luminance, i.e. it would accurately represent all luminances of the master HDR grading it can represent, but clip all brighter object to 100 nit white.

So the usual paradigm in the LDR era was to relatively map, i.e. the brightest brightness (here luminance) of the received image to the maximum capability of the display. So as this maps 5000 nit by division by 50 on 100 nit, the flames would still be okay since the are spread as yellows and oranges around 50 nit (which is a brightness representable for a yellow, since as we see in Fig. 1B the gamut tent for yellows goes down in luminance only a little bit when going towards the most saturated yellows, in contrast to blues (B) on the other side of the slice for this hue angle B-Ye, which blues can only be made in relatively dark versions). However this would be at the detriment of everything else becoming quite dark, e.g. the soldier 20/50 nit which is pure black (and this is typically a problem that we see in SDR renderings of such kinds of movie scene).

So, if having established a good HDR maximum luminance (i.e. ML_V) for the master grading, and a good EOTF e.g. PQ for coding it, we can in principle start communicating HDR images to receivers, e.g. consumer television displays, computers, cinema projectors, etc.

But that is only the most basic system of HDR.

The problem is that, unless the receiving side has a display which can display pixels at least as bright as 5000 nit, there is still a question of how to display those pixels.

Some (DR adaptation) <u>luminance down-mapping</u> must be performed in the TV, to make darker pixels which are displayable. E.g. if the display has a (end-user) **display maximum luminance ML_D** of 1500 nit, one could somehow try to calculate 1200 nit yellow pixels for the flame (potentially with errors, like some discoloration, e.g. changing the oranges into yellows).

This luminance down-mapping is not really an easy task, especially to do very accurately instead of sufficiently well, and therefore various technologies have been invented (also for the not necessarily similar task of luminance up-mapping, to create an output image of larger dynamic range and in particular maximum luminance than the input image).

Typically one wants a mapping function (generically, i.e. used for simplicity of elucidation) of a convex shape in a normalized luminance (or brightness) plot, as shown in Fig. 1D. Both input and output luminances are defined here on a range normalized to a maximum equaling one, but one must mind that on the input axis this one corresponds to e.g. 5000 nit, and on the output axis e.g. 200 nit (which to and fro can be easily implemented by division respectfully multiplication). In such a normalized representation the darkest colors will typically be too dark for the grading with the lower dynamic range of the two images (here for down-conversion shown on the vertical output axis, of normalized output luminances L_out, the horizontal axis showing all possible normalized input luminances L_in). Ergo, to have a satisfactory output image corresponding to the input image, we must relatively boost those darkest luminances, e.g. by multiplying by 3x, which is the slope of this luminance compression function F_comp for its darkest end. But one cannot boost forever if one wants no colors to be clipped to maximum output, ergo, the curve must get an increasingly lower slope for brighter input luminances, e.g. it may typically map input 1.0 to output 1.0. In any case the luminance compression function F_comp for down-grading will lie above the 45 degree diagonal (diag) typically.

Care must still be taken to do this correctly. E.g., some people like to apply three such compressive functions to the three red, green and blue color channels separately. Whilst this is a nice and easy guarantee that all colors will fit in the output gamut (an RGB cube, which in chromaticity-luminance (L) view becomes the tent of Fig. 1B) especially with higher non-linearities it can lead to significant color errors. A e.g. reddish orange hue is determined by the percentage of red and green, e.g. 30% green and 70% red. If the 30% now gets doubled by the mapping function, but the red stays in the feeble-sloped part of the mapping function almost unchanged, we will have a 60/70, i.e. 50/50 i.e. a yellow instead of an orange. This can be particularly annoying if it depends on (in contrast to the SDR paradigm) non-uniform scene lighting, e.g. an sports car entering the shadows suddenly turning yellow.

Ergo, whilst the general desired shape for the brightening of the colors may still be the function F_comp (e.g. determined by the video creator, when grading a secondary image corresponding to his master HDR image already optimally graded), one wants a more savvy down-mapping. As shown in Fig. 1B, for many scenarios one may desire a re-grading which merely changes the brightness of the normalized luminance component (L), but now the innate type of color, i.e. its chromaticity (hue and saturation). If both SDR and HDR are represented with the same red, green and blue color primaries, they will have a similarly shaped gamut tent, only one being higher than the other in absolute luminance representation. If one scales both gamuts with their respective MDWPL values (e.g. MDWPL1= 100 nit, and MDWPL2= 5000 nit), both gamuts will exactly overlap. The desired mapping from a HDR color C_H to a corresponding output SDR color C_L (or vice versa) will simply be a vertical shifting, whilst the projection to the chromaticity plane circle stays the same.

Although the details of such approaches are also beyond the need of the present application, we have thought examples of such color mapping mechanism before, where the three color components are processed coordinatedly, although in a separate luminance and chroma processing path, e.g. in WO2017157977.

If it is now possible to down-grade with one (or more) luminance mapping functions (the shape of which may be optimized by the creator of the video(s)), in case one uses invertible functions one can design a more advanced HDR codec.

Instead of just making some final secondary grading from the master image, e.g. in a television, one can make a lower dynamic range image version for communication, **communication image Im_comm.** We have elected in the example this image to be defined with its communication image maximum luminance ML_C equal to 200 nit. The original 5000 nit image can then be reconstructed (a.k.a. decoded) as a reconstructed image Rec_HDR (i.e. with the same reconstructed image maximum luminance ML_REC) by receivers, if they receive in metadata the decoding luminance mapping function FL_dec, which is typically substantially the inverse of the coding luminance mapping function FL_enc, which was used by the encoder to map all pixel luminances of the master HDR image into corresponding lower pixel luminances of the communication image Im_comm. So the proxy image for communicating actually an image a higher dynamic range (DR_H, e.g. spanning from 0.001 nit to 5000 nit) is an image of a different, lower dynamic range (DR_L).

Interestingly, one can even elect the communication image to be a 100 nit LDR (i.e. SDR) image, which is immediately ready (without further color processing) to be displayed on legacy LDR images (which is a great advantage, because legacy displays don't have HDR knowledge on board). How does that work? The legacy TV doesn't recognize the MDWPL metadatum (cos that didn't exist in the SDR video standard, so the TV is also not arranged to go look for it somewhere in the signal, e.g. in a Supplemental Enhancement Information message, which is MPEG's mechanism to introduce all kinds of pre-agreed new technical information). It is also not going to look for the function. It just looks at the YCbCr e.g. 1920x1080 pixel color array, and displays those colors as usual, i.e. according to the SDR Rec. 709 interpretation. And the creator has chosen in this particular codec embodiment his FL_enc function so that all colors, even the flame, map to reasonable colors on the limited SDR range. Note that, in contrast to a simple multiplicative change corresponding to the opening or shutting of a camera iris in an SDR production (which typically leads to clipping to at least one of white and/or black), now a very complicated optimal function shape can be elected, as long as it is invertible (e.g. we have taught systems with first a coarse pre-grading and then a fine-grading). E.g. one can move the luminance (respectively relative brightness) of the car to a level which is just barely visible in SDR, e.g. 1% deep black, whilst moving the flame to e.g. 90% (as long as everything stays invertible). That may seem extremely daunting if not impossible at first sight, but many field tests with all kinds of video material and usage scenarios have shown that it is possible in practice, as long as one does it correctly (following e.g. the principles of WO2017157977).

How do we now know that this is actually a HDR video signal, even if it contains an LDR-usable pixel color image, or in fact that any HDR-capable receiver can reconstruct it to HDR: because there are also the functions FL_dec in metadata, typically one per image. And hence that signal codes what is also colorimetrically, i.e. according to our above discussion and definition, a (5000 nit) HDR image.

Although already more complex than the basic system which communicates only a PQ-HDR image, this per SDR proxy coding is still not the best future-proof system, as it still leaves the receiving side to guess how to down-map the colors if it has e.g. a 1500 nit, or even a 550 nit, tv.

Therefore we added a further technical insight, and developed so-called display tuning technology (a.k.a. display adaptation): the image can be tuned for any possible connected tv, i.e. any ML_D, because one can double the function of the coding function FL_enc as some guidance function for the up-mapping from 100 nit Im_comm not to a 5000 nit reconstructed image, but to e.g. a 1500 nit image. The concave function, which is substantially the inverse of F_comp (note, for display tuning there is no requirement of exact inversion as there is for reconstruction), will now have to be scaled to be somewhat less steep (i.e. from the reference decoding function FL_dec a display adapted luminance mapping function FL_DA will be calculated), since we expand to only 1500 nit instead of 5000 nit. I.e. an image of tertiary dynamic range (DR_T) can be calculated, e.g. optimized for a particular display in that the maximum luminance of that tertiary dynamic range is typically the same as the maximum displayable luminance of a particular display.

Techniques for this are described in WO2017108906 (we can transform a function of any shape into a similarly-shaped function which lies closer to the 45 degree diagonal, by an amount which depends on the ratio between the maximum luminances of the input image and the desired output image, versus the ratio of the maximum luminances of the input image and a reference image which would here be the reconstructed image, by e.g. using that ratio to obtain closer points on for all points on the diagonal orthogonally projecting a line segment from the respective diagonal point till it meets a point on the input function, which closer points together define the tuned output function, for calculating the to be displayed image Im_disp luminances from the Im_comm luminances).

Not only did we get more kinds of displays even for basic movie or television video content (LCD tv, mobile phone, home cinema projector, professional movie theatre digital projector), and more video different sources and communication media (satellite, streaming over the internet, e.g. OTT, streaming over 5G), but also did we get more production manners of video.

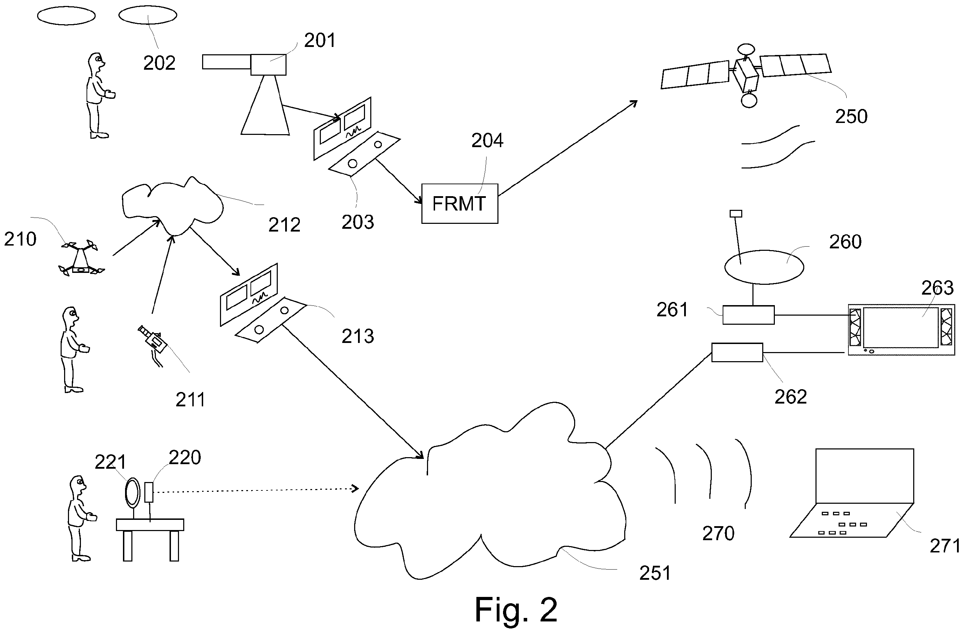

**Fig. 2** shows -in general, without desiring to be limiting- a few typical creations of video where the present teachings may be usefully deployed.

In a studio environment, e.g. for the news or a comedy, there may still be a tightly controlled shooting environment (although HDR allows relaxation of this, and shooting in real environments). There will be controlled lighting (202), e.g. a battery of base lights on the ceiling, and various spot lights. There will be a number of bulky relatively stationary television cameras (201). Variations on this often real-time broadcast will be e.g. a sports show like soccer, which will have various types of cameras like near-the-goal cameras for a local view, overview cameras, drones, etc.

There will be some production environment 203, in which the various feeds from the cameras can be selected to become the final feed, and various (typically simple, but potentially more complex) grading decisions can be taken. In the past this often happened in e.g. a production truck, which had many displays and various operators, but with internet-based workflows, where the raw feeds can travel via some network, the final composition may happen at the premises of the broadcaster. Finally, when simplifying the production for this elucidation, some coding and formatting for broadcast distribution to end (or intermediate, such as local cable stations) customers will happen in formatter 204. This will typically do the conversion to e.g. PQ YCbCr from the luminances as graded as explained with Fig. 1, for e.g. an intermediate dynamic range format, calculate and format all the needed metadata, convert to some broadcasting format like DVB or ATSC, packetize in chunks for distribution, etc. (the etc. indicating there may be tables added for signaling available content, sub-titling, encryption, but at least some of that will be of lesser interest to understand the details of the present technical innovations).

In the example the video (a television broadcast in the example) is communicated via a television satellite 250 to a satellite dish 260 and a satellite signal capable set-top-box 261. Finally it will be displayed on an end-user display 263.

This display may be showing this first video, but it may also show other video feed, potentially even at the same time, e.g. in Picture-in-Picture windows (or some data of the first HDR video program may come via some distribution mechanism and other data via another).

A second production is typically an off-line production. We can think of a Hollywood movie, but it can also be a show of somebody having a race through a jungle. Such a production may be shot with other optimal cameras, e.g. steadicam 211 and drone 210. We again assume that the camera feeds (which may be raw, or already converted to some HDR production format like HLG) are stored somewhere on network 212, for later processing. In such a production we may in the last months of production have some human color grader use grading equipment 213 to determine the optimal luminances (or relative brightnesses in case of HLG production and coding) of the master grading. Then the video may be uploaded to some internet-based video service 251. For professional video distribution this may be e.g. Netflix.

A third example is consumer video production. Here the user will have e.g. when making a vlog a ring lighter 221, and will capture via a mobile phone 220, but (s)he may also be capturing in some exterior location without supplementary lighting. She/he will typically also upload to the internet, but now maybe to youtube, or tiktok, etc.

In case of reception via the internet, the display 263 will be connected via a modem, or router 262 or the like (more complicated setups like in-house wifi and the like are not shown in this mere elucidation).

Another user may be viewing the video content on a portable display (271), such as a laptop (or similarly other users may use a non-portable desktop PC), or a mobile phone etc. The may access the content over a wireless connection (270), such as Wifi, 5G, etc.

So it can be seen that today, various kinds of video, in various technical codings, can be generated and communicated in various manners, and our coding and processing systems have been designed to handle substantially all those variants.

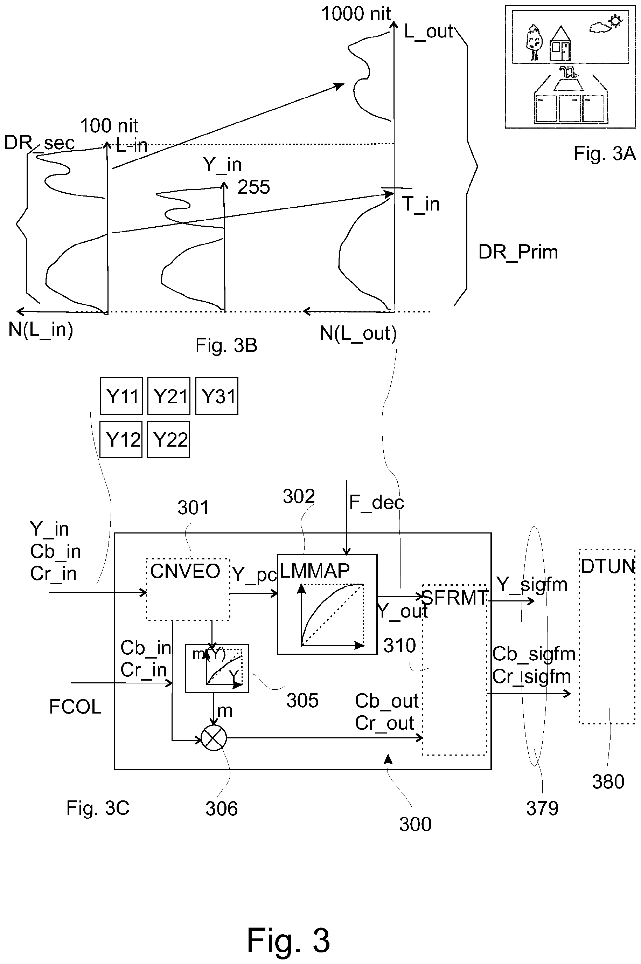

**Fig. 3** shows an example of an absolute (nit-level-defined) dynamic range conversion circuit 300 for a (HDR) image or video decoder (the encoder working similarly but with inverted functions typically, i.e. the function to be applied being the function of the other side mirrored over the diagonal). It is based on coding a primary image (e.g. a master HDR grading) with a primary luminance dynamic range (DR_Prim) as another (so-called proxy) image with a different secondary range of pixel luminances (DR_Sec). If the encoder and all its supply-able decoders have pre-agreed or know that the proxy image has a maximum luminance of 100 nit, this need not be communicated as an SDR_WPL metadatum. If the proxy image is e.g. a 200 nit maximum image, this will be indicated by filling its proxy white point luminance P_WPL with the value 200, or similarly for 80 nit etc. The maximum of the primary image (HDR_WPL= 1000), to be reconstructed by the dynamic range conversion circuit, will normally be co-communicated as metadata of the received input image, or video signal, i.e. together with the input pixel color triplets (Y_in, Cb_in, Cr_in). The various pixel lumas will typically come in as a luma image plane, i.e. the sequential pixels will have first luma Y11, second Y21, etc. (typically these will be scanned, and the dynamic range conversion circuit will convert pixel by pixel to output pixel color triplets (Y_out, Cb_out, Cr out). We will primarily focus on the brightness dimension of the pixel colors in this elucidation. Various dynamic range conversion circuits may internally work differently, to achieve basically the same thing: a correctly reconstructed output luminance L_out for all image pixels (the actual details don't matter for this innovation, and the embodiments will focus on teaching only aspects as far as needed).

The mapping of luminances from the secondary dynamic range to the primary dynamic range may happen on the luminances themselves, but also on any luma representation (i.e. according to any EOTF, or OETF), provided it is done correctly, e.g. not separately on non-linear R'G'B' components. The internal luma representation need not even be the one of the input (i.e. of Y_in), or for that manner of whatever output the dynamic range conversion circuitry or its encompassing decoder may deliver (e.g. a format luma Y_sigfm for a particular communication format or communication system, "communicating" including storage to a memory, e.g. inside a PC, a hard disk, an optical storage medium, etc.).

We have optionally (dotted) shown a luma conversion circuit 301, which turns the input lumas Y_in into perceptionally uniformized lumas Y_pc.

Applicant standardized in ETSI 103433 a useful equation to convert luminances in any range to such a perceptual luma representation:

$$Y\_pc = \log\_10\{1+[RHO(WPL\_inrep)-1]*power(Ln\_in; \ 1/(2.4)) \}/\log\_10\{ \ RHO(WPL\_inrep)\}$$

In which the function RHO is defined as

$$RHO(WPL\_inrep) = 1+32*power\{( \ WPL\_inrep/10000); \ 1/(2.4)\}$$

The value WPL_inrep is the maximum luminance of the range that needs to be converted to psychovisually uniformized lumas, so for the 100 nit SDR image this value would be 100, and for the to be reconstructed output image (or the originally coded image at the creation side) the value would be 1000.

Ln_in are the luminances along that whichever range which need to be converted, after normalization by dividing by its respective maximum luminance, i.e. within range [0,1].

Once we have an input and an output range normalized to 1.0, we can apply a luminance mapping function actually in the luma domain, as shown inside the luma mapping circuit 302, which does the actual luma mapping for each incoming pixel.

In fact, this mapping function had been specifically chosen by the encoder of the image (at least for yielding good quality reconstructability, and maybe also a reduced amount of needed bits when MPEG compressing, but sometimes also fulfilling further criteria like e.g. the SDR proxy image being of correct luminance distribution for the particular scene -a dark cave, or a daytime explosion- on a legacy SDR display, etc.). So this function F_dec (or its inverse) will be extracted from metadata of the input image signal or representation, and supplied to the dynamic range conversion circuit for doing the actual per pixel luma mapping. In this example the function F_dec directly specifies the needed mapping in the perceptual luma domain, but other variants are of course possible, as the various conversions can also be applied on the functions. Furthermore, although for simplicity of explanation, and to guarantee the teaching is understood, we teach here a pure decoder dynamic range conversion, but other dynamic range conversions may use other functions, e.g. a function derived from F_dec, etc. The details of all of that are not needed for understanding the present innovative contribution to the technology.

In general one will not only change the luminances, but there will be a corresponding change in the chromas Cb and Cr. That can also be done in various manners, from strictly inversely decoding, to implementing additional features like a saturation boost, since Cb and Cr code the saturation of the pixels. Thereto another function is typically communicated in metadata (recoloring specification function FCOL), which determines the chromatic recoloring behavior, i.e. the mapping of Cb and Cr (note that Cb and Cr will typically be changed by the same multiplicative amount, since the ratio of Cr/Cb determines the hue, and generally one does not want to have hue changes when decoding, i.e. the lower and higher dynamic range image will in general have object pixels of different brightness, and oftentimes at least some of the pixels will have different saturation, but ideally the hue of the pixels in both image versions will be the same). This color function will typically specify a multiplier which has a value dependent on a brightness code Y (e.g. the Y_pc, or other codes in other variants). A multiplier establishment circuit 305 will yield the correct multiplier m for the brightness situation of the pixel being processed. A multiplier 306 will multiply both Cb_in and Cr_in by this same multiplier, to obtain the corresponding output chromas Cb_out= m*Cb_in and Cr_out=m*Cr_in. So the multiplier realizes the correct chroma processing, therefore the whole color processing of any dynamic range conversion being correctly configurable in the dynamic range conversion circuit.

Furthermore, there may typically be (at least in a decoder) a formatting circuit 310, so that the output color triplet (Y_out, Cb_out, Cr_out) can be converted to whatever needed output format (e.g. an RGB format, or a communication YCbCr format, Y_sigfm, Cb_ sigfm, Cr_sigfm). E.g. if the circuit outputs to a version of a communication channel 379 which is an HDMI cable, such cables typically use PQ-based YCbCr pixel color coding, ergo, the lumas will again be converted from the perceptual domain to the PQ domain by the formatting circuit.

It is important that the reader well understands what is a (de)coding, and how an absolute HDR image, or its pixel colors, is different from a legacy SDR image. There may be a connection to a display tuning circuit 380, which calculates ultimate pixel colors and luminances to be displayed at the screen of some display, e.g. a 450 nit tv which some consumer has at home.

However, in absolute HDR, one can establish pixel luminances already in the decoding step, at least for the output image (here the 1000 nit image).

We have shown this in Fig. 3B, for some typical HDR image being an indoors/outdoors image. Note that, whereas in the real world the outdoors luminances may typically be 100 times brighter than the indoors luminances, in an actual master graded HDR image it may be better to make them e.g. 10× brighter, since the viewer will be viewing all together on a screen, in a fixed viewing angle, even typically in a dimly illuminated room in the evening, and not in the real world.

Nevertheless, we find that when we look at the luminances corresponding to the lumas, e.g. the HDR luminances L_out, we typically see a large histogram (of counts N(L_out) of each occurring luminance in an output image of this homely scene). This spans considerably above some lower dynamic range lobe of luminances, and above the low dynamic range 100 nit level, because the sunny outdoors images have their own histogram lobe. Note that the luminance representation is drawn non-linearly, e.g. logarithmically. We can also trace what the encoder would do at the encoding side, when making the 100 nit proxy image (and its histogram of proxy luminance counts N(L_in)). A convex function, as shown in Fig. 1, or inside luma mapper 302, is used which squeezes in the brighter luminances, due to the limitations of the smaller luminance dynamic range. There is still some difference between the brightness of indoors and outdoors, and still a considerable range for the upper lobe of the outdoors objects, so that one can still make the different colors needs to color the various objects, such as the various greens in the tree. However, there must also be some sacrifices. Firstly the indoors objects will display (assuming for the moment an 100 or 200 nit display would faithfully display those luminances as coded, and not e.g. do some arbitrary beautification processing which brightens them) darker, darker than ideally desired, i.e. up to the indoors threshold luminance T_in of the HDR image. Secondly, the span of the upper lobe is squeezed, which may give the outdoors objects less contrast. Thirdly, since bright colors in the tent-shaped gamut as shown in Fig. 1 cannot have large saturation, the outdoors colors may also be somewhat pastellized, i.e. of lowered saturation. But of course if the grader at the creation side has control over all the functions (F_enc, FCOL), hey may balance those features, so that some have a lesser deviation at the detriment of others. E.g. if the outdoors shows a plain blue sky, the grader may opt for making it brighter, yet less blue. If there was a beautiful sunset, he may want to retain all its colors, and make everything dimmer instead, in particular if there are no important dark corners in the indoors part of the image, which would then have their contents badly visible, especially when watching tv with all the lights on (note that there are also techniques for handling illumination differences and the visibility of the blacks, but that is too much information for this patent application's elucidation).

The middle graph shows what the lumas would look like for the proxy luminances, and that may typically give a more uniform histogram, with e.g. approximately the same span for the indoors and outdoors image object luminances. The lumas are however only relevant to the extent of coding the luminances, or in case some calculations are actually performed in the luma domain (which has advantages for the size of the word length on the processing circuitry). Note that whereas the absolute formalism can allocate luminances on the input side between zero and 100 nit, one can also treat the SDR luminances as relative brightnesses (which is what a legacy display would do, when discarding all the HDR knowledge and communicated metadata, and looking merely at the 0-255 luma and chroma codes).

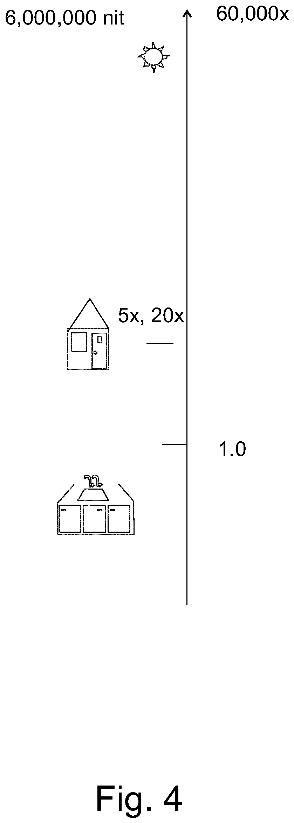

**Fig. 4** elucidates how the computer world looked at HDR, in particular for the calculation of HDR scenes, e.g. by ray-tracing (i.e. the equivalent of actual camera capturing). This technology, which can be used in e.g. gaming, in which a different view on an environment has to be re-calculated each time a player moves, potentially with a specular reflection appearing that wasn't in view when the player was positioned one game meter to the left, was not primarily geared for communication, e.g. from a broadcaster to a receiver, any receiver, with any of various kinds of displays with different maximum brightness characteristics. These calculations and representations originated for a typical application (tightly managed) inside a single PC, and were certainly not developed with a view on many future quite different applications. When one actually calculates a HDR image, by defining e.g. a very bright light source and (internally) physically modeling how it illuminates a pixel of a mirror, one can define just any HDR luminance. But one of the problems is already one can calculate it, but not necessarily display it. E.g., one would typically use a floating point representation (e.g. 16 bit half-float for representing the luminance, in a logarithmic format, i.e. able to represent almost infinite luminances, basically ridiculously large from the point of view of actually using for display). One would then consider all luminances lower than 1 (which can also be stated as the relative 100%) as the normal SDR luminances. It may not be the best way to treat, e.g. display, an HDR float image, but some systems or components, or software would indeed clip everything above 1 to 1.0, and just use the lower luminances. The outdoors objects, like the house, when being computationally generated, may have luminances a multiplication factor higher than 1.0, e.g. 5x or 20x (if one were to associate 1.0 with 100 nit, which was not necessarily done in the computer view, one could say these would be e.g. 500 nit). One could make the sun e.g. as bright as 1 million nit, which would need severe down-mapping to make it visible as a light yellow sphere, or, it would typically clip to white (which would not be an issue, since also in the real world the sun is so bright that it will clip to white in camera capturings). However, there may be issues with other objects in the down-mapping.

One difference one already sees with e.g. the PQ representation is that this representation is closed (one assumes every luminance one is ever going to need in practice may reasonably fall below its maximum being 10,000 nit), and therefore one can do e.g. luminance mappings based on this end-point, whereas the computer log format is -pragmatically- open, in the sense that it can go almost infinitely above 1. One could say that even for a 16 bit logarithmic format there is some end-point, but that is much less interesting to map, than mapping the values around 1.0 (compressing e.g. linearly from 1 million nit would make all indoors pixels pitch black). So open-ended representations need a somewhat different luminance mapping (called tone mapping in this sub-area), but on a more general level one can come to some common ground approach, at least in the sense that both sub-fields of technology have been able to create LDR images (and similarly, in the modern area, one can also create (common) HDR images for both).

Computer games, which were until recently played on SDR displays mostly anyway, despite making beautiful lifelike images, needed to down-map those to yield SDR images. One could argue that would not be so different from the down-mapping of natural, camera-captured HDR images, which was not typical until recently anyway. But the tone mappers were sometimes difficult to fathom, and somewhat ad hoc. Nevertheless, HDR gaming did become possible, even with some introductory pains, and people loved the look. But having things sorted out for, like HDR television, another tightly controlled application, doesn't mean yet that all HDR problems are solved in the computer world.

Television versus computing environment

Although there are still many flavors (and technical visions, e.g. the absolute PQ-based coding versus the relative HLG-based coding), as shown above at least for the simple video communication (e.g. for broadcast television services) the situation is relatively simple and akin to the "direct display control line" situation of the analog PAL era (which used the display paradigm: the brightest code in the image -white- gets displayed as the brightest thing on the display, and perceived by the viewer as the whitest white). At least there is some well-understood (cos standardized) video coming in, and it simply needs to be decoded, and shown as a sole item on the entire screen (not necessarily only as a window on the tv screen, in e.g. a web page).

The computing environment in contrast is a very heterogeneous environment. In the 1980s, almost everything was very dedicated for specific computers, (simplistic) proprietary versions of software existed, and since many functionalities were missing for some computers, this didn't make the general purpose computer so general in actuality. A private buyer would have to make do with the computer he bought, and some computer vendors in the 90s sold the computer together with a suit of useful software applications, such as an encyclopedia on CD ROM, etc. Companies could have the choice to buy all apple computers for everybody, or all windows PC's, and work cooperation or contracting in those days was not so common as today. E.g., the word processing software on Tandy drew some coarse emulation of selection menus by drawing a few lines around a vertical list of keywords. Those applications had to take control of the entire screen, whereas modern operating systems can handle various applications in various windows (the unhandy state of affairs in HDR currently would seem to be a throw back to the 80s).

Although the Cathode Ray Tube monitors each customer in his specific computer setup had were in principle of the same construction, dedicated cable connector formats made everything specific. Even the byte order of data varied between the Apple and PC world, making interchange even less easy. On the one hand that made things easy, since a Macintosh programmer could study the one and later three mac books and know everything he needed, but on the other hand, a developer of e.g. a game needed to make many different versions for the various platforms if he wanted a larger audience. This led inter alia to the fact that even in the early 21$^{st}$ century owners of a Macintosh could not do internet banking with a dedicated software issued by the bank.

That improved when such an internet banking process became server-based. Any computer then only needed to sufficiently implement the standardized protocol elements like e.g. a browser to communicate via HTTPS, to read and display HTML code, etc. For "plain text" kind of communication that would always seem to work, just as one could use highly standardized formats such as pdf or jpeg for inter-system communication and cooperation. However under the hood, there were still many differences. E.g., whilst the various systems had a visual user interface with windows, and all of those would similarly have an image area in which something could be drawn by an application, a scroll bar for scrolling if the size of the content was larger than the window area, and a bar to pick and place the window, not only the look and feel of e.g. an X-windows window for Unix was different than on the mac, but more importantly the manner of defining it. Also, although both the mac, PC and unix systems would create RGB colors for a same CRT monitor (or an LCD monitor which by its internal hardware emulates the display behavior of a CRT monitor), that still led to the fact that the pre-defined graphics colors (a.k.a. palette) of x-windows were not the same as those on a mac or pc.

In practice, with the fast evolution of computers, which became more of a kit of parts, almost everything changed (except for the convergence of standardizing cables to USB, or HDMI and the like). The same computer (apparatus) could run windows (and in fact, any even older version of windows), or Linux. But even if the computer owner had installed a common version of windows, the hardware in the computer could change: e.g. it could have a Graphics Processing Unit (GPU) from AMD, Intel, or Nvidia (and since smartphones became popular computers for the present situation, we can add the popular Qualcomm processors). And some of those could have e.g. 2GB video RAM (VRAM) for storing inter alia textures on the GPU, whilst others may have 8 GB. For web applications one can choose to connect with the web via e.g. Edge, Chrome, Firefox (or the dedicated Samsung browser on Samsung phones; and various apps on TVs), etc. GPUs had their own functionality, operating systems had their prescribed behavior, and the creator of an application simply wanted to draw a sentence of typed text or an image.

The problems described herein, and the solutions offered by the embodiments will be similar for native applications (which are specifically written for a specific computer platform, and run on that computer platform) and for the currently popular web applications, which are served from a remote server, i.e. have a number of services from that remote server, yet may rely for some computations (e.g. execute downloaded javascript) on the local client computer, and may need to do so for certain steps of the program. To the customer it does not seem to make much difference whether his spreadsheet is installed locally, or running on the cloud (except maybe for the subscription fee). He may not even realize that if he is typing an email in gmail running in a browser, that under the hood he is actually making use of internet technologies, as he is writing html lines. The difference between a local file browser and an internet file browser is becoming less. On the other hand, since any service is running over the internet then, those systems may want to make use of ever more advanced features, which may need to take recourse to details of the client's computing device, under the hood. E.g., a server-controlled internet game, may use a farm of processors to calculate the behavior of virtual actors, yet want to benefit from the hardware acceleration of calculations on the client's GPU, e.g. for doing the final shading (with shading in the computer sense we mean the calculations needed to come to the correct colors including brightnesses of an object, e.g. using a simulation of illumination of some object with some physical texture like a tapestry, or interpolation of colors of vertices of a triangle, which pixel colors typically end up as red, green and blue color components in a color buffer; the name rendering can also be used, but means the higher level whole process of coming to an image of an object from a viewpoint, for any generation of a NxM matrix of pixels in a so-called canvas, which is a memory in which to put finally rendered pixels, taking into account also such aspects as visibility and occlusion). Whereas we do not want to imply any limitations, we will elucidate some technical details of our innovations with some more challenging web application embodiments.

There are particular problems when several visual assets, of different brightness dynamic range, need to be displayed in a coordinated manner, such as e.g. in a window system on a computer (and possibly more challenging on several screens, of possibly different brightness capability). This is already a difficult technical problem per se, and the fact that in practice many different components hence producers/companies are involved (various software or middleware applications, different operating systems controlled by companies like Microsoft or Google, different Graphics Processing Unit vendors, etc.) does not necessarily make things easier. In this text with **visual asset** we do not necessarily mean a displayable thing in an area that has been <u>prepared previously,</u> and e.g. stored in a memory, but also visual assets that can be generated on the fly, e.g. a text with HDR text colors generated as it is being typed, into some window, and to end up in some canvas which collects all the visual assets in the various windows, to ultimately get displayed after traveling through the whole processing pipe which happens to be in place in the computer being configured with that particular set of applications presenting their visual assets.

To be clear, what we mean by graphics processing unit is a circuit (or maybe in some systems circuits, if there are two or more separate GPUs being supplied with the visual assets to be displayed in totality) which contain the final buffering for such pixels that should be shown on a display, i.e. be scanned out to at least one display (and not processors which do not have this scanout buffer and circuitry for communicating the video signals out to display(s); this GPU is sometimes also called Display Processing Unit DPU).

So there is a need for a universal well-coordinatable approach of handling HDR (and possibly some SDR) visual assets on computers, which may have several applications running in parallel, none of them controlling the entire visible screen, and which may work (in the sense of at least sending their preferred pixel colors to the GPU scanout buffer) through various layers of software, middleware, APIs etc.

SUMMARY OF THE INVENTION

The indicated problems are solved by computer (700) running at least one primary software application (701), in which the primary software application is arranged to present for display visual assets of different brightness range, wherein the primary software application presents a first visual asset (702) which comprises pixels which have brightnesses lying within a first brightness range (DR_H);

wherein the primary software application comprises a luma mapping (704) arranged to map a first color code triplet (RGB1) which codes a first brightness of a pixel (7201) to a corresponding second color code triplet (RGB2) which codes a second brightness for said pixel, by applying one or more primary mapping functions (F_Y) to the first color code triplet yielding the second color code triplet, wherein the second brightness is a brightness lying in a second brightness range (DR_L) of different size than the first brightness range;

wherein the primary software application comprises a formatting (707) arranged to compose secondary color code triplets (RGB2) from the luma mapping into a first image data structure (IMDAT) for communicating to a secondary software (720), and communicate to the secondary software (720) the first image data structure (IMDAT) together with a coding of the one or more primary mapping functions (F_Y) and a coding of a spatial region (REG1) of applicability of the one or more primary mapping functions (F_Y);

wherein the primary software application comprises a primary controller (710) arranged to output a pass-through control signal (C_PT) instructing to a secondary controller (722) in the secondary software (720) that the one or more primary mapping functions (F_Y), or one or more derived mapping functions (F_Y*) which are based on the one or more primary mapping functions (F_Y), should be passed to a tertiary software (740), which tertiary software is in control of supplying final pixel colors for a scanout buffer (511) of a graphics processing unit GPU (510), and wherein the tertiary software is arranged to pass the one or more primary mapping functions (F_Y) respectively one or more derived mapping functions (F_Y*) to the GPU.

The primary software application may typically be an application serving a user. E.g., the user may be interacting with a dynamic webpage via a browser, which webpages nowadays may have various regions trying to interact with the user, or even grab his attention. There may e.g. be on-the-fly loaded commercial windows or areas, which should not become so overpowering that the user cannot find what he was actually looking at, e.g. the query box where he would type in a book to order. Nevertheless, harmonization of the brightnesses of the various visual assets inside or outside the browser window is only a secondary technique, the present embodiments being primarily concerned with being able to get any pixel brightnesses as desired correctly to the scanout buffer at all.

The secondary software (which may be an application for a user, or some software running under the hood of the windowing system) may e.g. be another web browser concurrently open on another page, or an MS word file window, or a game which may be retained in pause mode, etc. It may also be, if there is only one actual user application requesting the techniques of this patent application, the operating system. Under computer we understand any generic platform, which is able to run many different software applications, also concurrently (i.e. taking up their own space of a total visual canvas, or its memory buffer, and ultimately on one or more display screens). This implies that typically such computers would have an operating system for coordinating all the applications with the hardware functionalities, and on the other hand the operating system would have a windowing server, which coordinates where the visual feedback of all applications resides on the screen, and in which manner. A portable computer like a mobile phone will in detail divide its pixel real estate differently (and as UI elements simply add a status bar and navigation bar) than e.g. a desktop attached to a big 4K screen, or even a multi-screen work environment, but as regards the present technical embodiments, the principles are the same.

With different brightness range we mean that the brightnesses of the pixels in one of the visual assets stretch beyond (typically at the bright end) the brightnesses of the other asset. There may be up-mapping (i.e. range stretching) involved from input to output, the output typically representing a common space, but usually there will be down-mapping (a.k.a. downgrading). In many of the below embodiments one of the ranges will be of a SDR color gamut (though not necessary for the implementation of the techniques, sRGB proves to be a good mode of implementation, since it is a capable and well understood standardized manner of coding the SDR gamut). For relative HDR representations (i.e. codes for the brightnesses, a.k.a. lumas, coding then percentages of a reference brightness which is universally understood typically by standardization) a larger than SDR HDR image means that pixels can have luma (or normalized luminance) values larger than 1 (or 100%), and typically some of the pixels in an image will have such high values. A primary HDR image that has a larger range than a secondary HDR image, means that the first one can have pixels e.g. up to more than 500%, whereas the second one can e.g. go only as high as 300%. Absolute HDR image codings will have exact luminances allocated to the pixels (i.e. the lumas will be understood to code corresponding luminance values instead of percentual brightnesses). A typical reference luminance will be associated with a stand-alone visual asset, like an image or a video. An SDR image has typically as SDR reference luminance (i.e. what the maximum luma code, e.g. 1023, will display at) of 100 nit (this is not to be confused with a mixing value for mapping such an SDR visual asset into a HDR range, where one expects SDR content to be somewhat brighter, and sometimes a controllable SDR maximum luminance can be used, e.g. controllable via a UI brightness function for the user, but this value may typically be taken to be 200 nit). So brightness will be the general nomenclature in our formulations, which covers both relative, and the more specific wording luminance, which will be used if a part of the discussion needs to focus on the absoluteness of the embodiment.

Color code triplet should be understood by the skilled person of graphical presentation. For simplicity of elucidation we will assume that the color coding for additive display will simply be RGB, or another popular representation YCbCr, in which Y is the luma code, coding for the brightness of the visual impression of a pixel. Although some multi-primary additive displays can use more than three color components in the color generation, such displays or codings never became popular, so we will stay within the known paradigm that three correctly balanced color component values are enough to make substantially any color desired. However, the skilled person knows that there can be various manners to represent, and code, such color triplets. E.g., one can also use Hue Saturation Value (HSV), and some applications will use, and communicate, such values. Whichever coding one desires to use, it always codes a pixel brightness, i.e. at least a relative brightness. The various representations can be transformed into each other by fixed and known colorimetry math. E.g., the luma Y is related to the non-linear RGB components (obtained from the linear ones as output of applying an OETF) by the equation $Y=a*R'+b*G'+c*B'$, where a,b, and c are known constants. So the exact details of the representation not being relevant for understanding the present technical contributions, we may assume that an input color code triplet YCbCr1 will get transformed to an output color code triplet YCbCr2, and just focus our elucidating technique teachings on that variant, since the skilled person knows how to transform YCbCr2 into RGB2 driving coordinates for display. The output color will be the correctly coordinated corresponding color value in the differently sized dynamic range of the output image, compared to the dynamic range of the input image. E.g., the selection of the particular function to use may focus on keeping the hue constant between the two images, and squeeze the pixel brightnesses of at least the brighter objects in the input image in a more limiting upper range of the output dynamic range, whilst also balancing the saturations. The exact details of either which colors any application wants to present for any visual asset, or on the other hand which brightness or color remapping functions to apply exactly, will be a detail of any application, and our present patent application is just a technical framework for handling all such situations. We will hence stick to only elucidating with some examples from which one can generalize the understanding.

One or more mapping functions is to be understood in terms of the under the hood details of the color coding embodiment. E.g., one can well map three RGB input components by applying just one function similarly on the three components. That is often done, and although it can introduce some color shifts, it may be sufficiently satisfactory for some applications, which we also want to cater for in our new approach. Another approach would do the brightness transformation on the luma component Y, with a first function, and use another function on the Cb and Cr values to coordinate the chroma with the new brightness. In that case we would hence actually apply two functions to the input triplet, to obtain the correct output triplet. Some approaches, like our SLHDR-1 standardized in ETSI 103433, can define the output color after a succession of several functions to be applied to the pixel lumas, e.g. first a coarse re-grading, and then a finetuning. In any case all the functions needed will be communicated to (e.g. passed as arguments of a call) to the receiving software module, and the details of whether that happens as a few parameters uniquely defining one or more functions (e.g. a, b, and c defining the shape of a quadratic function $a*x*x+b*x+c$, if it is known or indicated that a quadratic function is communicated), or as a LUT specifying the behavior of applying the one or more functions on the moving of input values of color components to output values of color components, is again a detail of the technical principles.

Note that the one or more functions to remap the colors in one visual asset, i.e. in one region of the canvas, should not be confused with more than one typically different functions for different assets or regions (even within one asset). To distinguish between those we have called those primary mapping functions (F_Y), secondary mapping functions (F_Y2), etc. The reader can for simplicity of understanding simply assume that in the first region of the total canvas, i.e. the screen buffer, a first quadratic function is applicable with first constants a1,b1,c1 (e.g. determined by the primary software application), an in a second region, say for simplicity the background of the screen around the window of the primary software application, the secondary software, say the operating system, will make a secondary quadratic mapping function with second constants a2,b2,c2 applicable there.

The formatting details (IMDAT), or their precise communication via specifyable API call codings, are also irrelevant to the principle, and understandable to the skilled person. The two software modules can agree to communicate according to some <u>pre-agreed color space</u> (fixed, or pre-configurable e.g. upon opening the window of the primary software application the first time). We elucidate by two examples, sRGB, or some pre-agreed HDR color space. The latter will typically coordinate a) a word length and binary representation, e.g. 16 bit float for the Y component, and the Cb Cr; b) a color model, e.g. RGB being code in the three components, or YCbCr being coded in the three 16 bit words; c) a specification of the precise geometry i.e. units and size of the color space, which will typically involve selecting primaries such as EBU RGB primaries, or the more saturated wide gamut DCI-P3 primaries, and a white point chromaticity such as daylight D65; d) an EOTF which specifies how non-linear codes in the representation code for corresponding linear brightnesses of magnitudes of linear RGB components, which may be a linear one in case we communicate e.g. linear floating point relative HDR color components; and optionally d) for absolute HDR spaces one may coordinate further numerical brightness range-related information, such as a white point luminance of a mastering display associated with the image content of the visual asset, i.e. for which this content is specifically graded (to be optimal without needing further color remapping).

To be clear for the colorimetrically less educated reader: this above color formatting alignment between two software processes <u>just specifies the colors of some (sole) image *per se,*</u> i.e. e.g. some huge span of HDR colors in PQ representation. As we will see below, we will also have luminance (or luma) mapping functions, which define how this primary image per se can be mapped to and from pixel colors of a secondary image, which will represent the primary image, when communicating between software processes (but any process could also, if needed, reconstruct the primary image from the secondary one as received, by applying the one or more functions to the pixel color code triplets of the secondary image as received). A benefit of choosing only a few selectable options (maybe always only using sRGB) from pre-fixed formats, means that one can communicate this easily via a variant indicator (e.g. "color_space"==1 means all e.g. 3x10 bit color codes are sRGB; or "color_space"==2 means that the values should be re-interpreted to linear values by using the PQ EOTF), and then one can focus on what will really matter and vary significantly in the present approach and embodiments: <u>the one or more functions</u> (F_Y) (i.e. their particular elected shapes) to apply to the e.g. sRGB pixel colors, to e.g. typically re-obtain HDR canvas compositions, ultimately on at least one of the connected displays being a HDR display.

The specific details of how exactly to control via control signal (C_PT) the "pass through functions, and leave the colors in the image of the passed canvas of the primary software application alone" (which means that: the second software may temporarily, e.g. in a separate internal buffer, reconstruct HDR colors by applying the received one or more functions F_Y on the received sRGB values to see what HDR impression was intended, e.g. in a PQ representation, so that it can determine its own coordinated colors to mix in, e.g. a not too bright top bar or scroll bar of a window, but it shall communicate out the colors of the primary software application in its canvas region unmapped, as any mapping should happen later, in the GPU or connected display; some embodiments may change the co-communicated function F_Y in a derived function F_Y* though) are also irrelevant for the principle. In some simple API embodiments it may e.g. be clear from the wording of the API call which also passes all other information, e.g. <u>"FINALIZED_PARTIAL_CANVAS(Im_SDR, F_Y, REG1; COLOR_SPACE)"</u>, although other APIs may find it beneficial to e.g. at least separate the color space coordination from the partial canvas image/texture coordination. The principle is that this instructed pass-through to GPU behavior happens in one or more (intervening, in the path to the GPU) second software(s), as requested by the primary software application.

The tertiary software is the last/ultimate software which does the communication of all the correct information as according to the embodiments to the GPU, i.e. the fully composed ready-to-display pixellated color image for the scanout buffer (again in whatever agreed format, sRGB, PQ, or relative 16 bit float, etc.), and all metadata, i.e. the color space definers, the primary and secondary (and if applicable tertiary, etc.) functions, and regions of applicability (REG1*, which is based on REG1, but e.g. missing a corner because some other window overlaps, REG2). It may in practice often be a part of the operating system, so part of secondary software, in case that is the operating system and not e.g. another intermediate application or software.

The technical effect beyond the known techniques of this control system for the displaying of multi-window visual assets is that, be it controlled via software processes, it enables to have a good coordination of the HDR color needs of various visual assets of various processes, and hence ultimately a good visual look on not necessarily only one, but potentially even various quite different displays, rather than an ad hoc uncoordinated and ugly display.

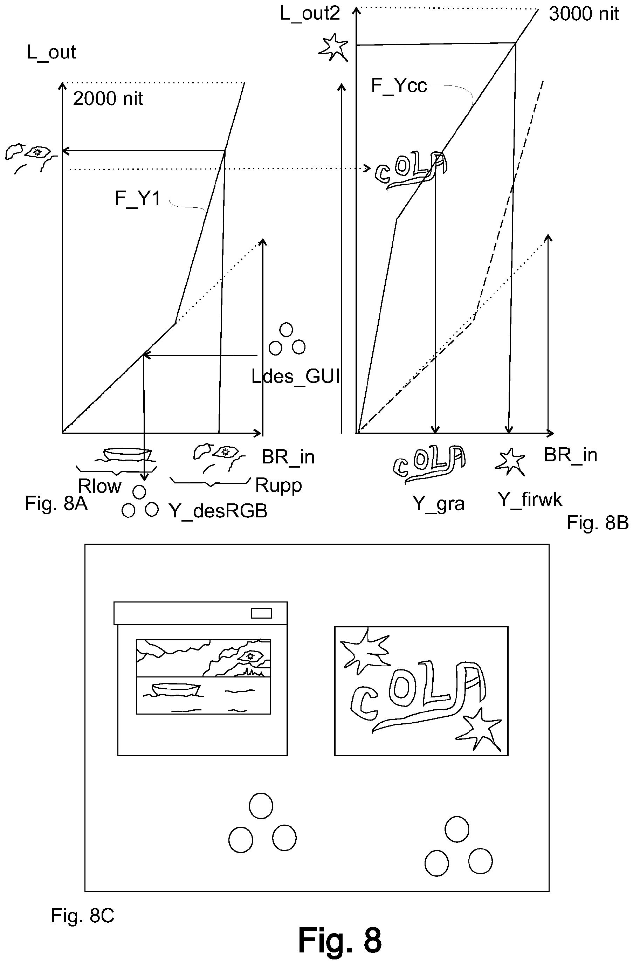

We elucidate this somewhat further to make it more clear with **Fig. 8,** which elucidates how the coding of HDR colors based on luminance or luma mapping functions (or the corresponding in another color representation), and in particular SDR-to-HDR upgrading functions being the inverse of HDR-to-SDR down-grading functions can aid in the liberal coordination of geometrical (e.g. Graphical User interface GUI) composition of various HDR visual assets, and in particular if different mapping functions for different regions, from different software processes e.g. applications are enabled. Applicant has invented and tested that HDR images or colors can actually be represented/defined by corresponding ("proxy") SDR colors, and the benefits of that can be used in another technical manner, which specifically benefits windowing systems for computers, such as used inter alia by web applications.

The left window in the total screen canvas of Fig. 8C (corresponding to the brightness mappings in Fig. 8A) shows e.g. an HDR movie from youtube which the user is watching, and that is an example of the primary software application in our generic description. Let's say the colors of this movie are defined by a PQ-based YCbCr model, and the pixel luminances can range up to 2000 nit maximally. We are looking at some sunset scene over the sea, which has important visual information in the brightest regions of the image (or its representable colors), namely colorful red, orange and yellow brightly lit clouds. When mapping into sRGB, those colors will need to get squeezed into a relatively narrow upper range (Rupp; the darker colors in lower range Rlow e.g. retaining approximately equal nit values in the SDR and HDR representation), but in any case, we have demonstrated that this is possible, and even with good reconstructability of the original master HDR images.

If the primary software application uses a function to map its original master HDR colors to the sRGB proxy image colors (i.e. the image that will get communicated to other software processes, e.g. at least the operating system, as IMDAT), it can use the inverse function to recreate -hence define-the HDR colors based on the sRGB colors. We hence have shown on the horizontal axis of the Fig. 8A plot relative brightnesses of the SDR proxy image (e.g. linear percentages of 100% being the maximum). Say the elect function of the primary software application is primary mapping function F_Y1. The operating system may want to add its own visual assets to the ultimate canvas, i.e. the screen buffer, e.g. the bubbles of the background picture (or the window bar). The operating system may consider being fine to work in the colorimetric framework already elected and communicated by the primary application, hence it can re-use the function F_Y1 for the linking between HDR colors as desired, and the common color space representation, which is here for simplicity of explanation elected to be sRGB, which is also pragmatically a good option. It can decide to be modest in its color use, and that the bubbles should fall e.g. somewhere halfway the lower range for the averagely bright objects. Via the primary mapping curve F_Y1, any desired luminance Ldes_GUI to be ultimately displayed (or a dependent luminance if further display adaptation needs to occur, but then at least this was a universally established desideratum) can be converted into a relative sRGB brightness BR_in, namely desired brightness Y_desRGB, or possibly the corresponding relative RGB component values. The reader understands that the OS need not necessarily actually calculate an HDR image from the received sRGB proxy image, since in principle it just needs to apply the function shapes, but in some scenarios this may be desirable, e.g. if a histogram of all actually occurring pixel values needs to be calculated, or even spatial pattern analysis will be done to guide elections of the GUI colors of the OS.

In any case, in this simple scenario, the OS will communicate to the GPU the composed sRGB image (will all visual assests in their correct positions), and the sole function F_Y1, since no other functions were defined. Any calculation of any ultimate HDR image, e.g. to output to a display, by the GPU, will use then this F_Y1 to determine all HDR pixel colors. Note that if the region of applicability of a function happens to default to the whole screen, this can be communicated by default REG1* codes, e.g. "FULL", or "NULL" or the like.

We have now also a second application, which has its own color desiderata, and its own region of the screen, which is a commercial for cola, the brightness mappings of which are shown in Fig 8C. Let's assume for the elucidation that the two software applications know about each other, in the sense that at least the tertiary application being the commercial window has access to the image color content of the primary color content of the primary software application, but the tertiary color code triplets may also be generated totally separate in other scenarios.

The tertiary application may -with various internal coded algorithms- inspect the colors in the movie, and try to outperform those. E.g. it may analyse that the brightest regions are the sunlit clouds, and define its textual information ("cola") around those luminance levels. It may make the firework explosions even brighter.

We now see that, if it defines its own luminance or luma commercials mapping function F_Ycc, the shape of which it can still optimally design, it can make any colors wanted, yet still define them in the common color space of the ultimate canvas/screen buffer, in this case having an sRGB representation. By separately communicating luminance mapping functions, one can e.g. suddenly have another visual asset that can define its maximum pixel luminances as high as 3000 nit, rather than 2000. Also, by optimizing the shape, the tertiary application can elect how bright respectively the text and the fireworks should be not just in its master HDR representation, but also in its sRGB partial canvas.

The specifics of how a secondary software (here the OS example) may want to coordinate its own pixel luminances with what is already in a canvas of a primary software application, may be very diverse and beyond the scope of this patent application. E.g. the mixing may happen on a range which ends at the larger one of the two ranges, but the mix output range may also be somewhat smaller than the largest range, because the compositor wants to cater for an in-between coordinated range (e.g. the upper 10% of the brightnesses of the larger range are mapped into the output range, with a corresponding derived function). Also where the secondary software wants to map its object pixel colors exactly can be variable, from determining this solely on the extent of the output range, to looking at what is already in the range from the primary software application, e.g. a histogram of those pixel luminances, etc.

But furthermore, using this technical approach has also several advantages for the GPU. It can now focus e.g. on good display adaptation on already a composed image, yet, since all the mapping function information is still there, also for various displays, even if one visual asset shifts partially from one display to the next.

It is further advantageous if the computer (700) has at least a part of the scanout buffer filled with a copy of the second color code triplets (RGB2) as specified in the first image data structure (IMDAT), i.e. without having undergone any colorimetric modification such as a dynamic range adaptation and the like, and wherein a derived coding of a spatial region (REG1*), which is based on the coding of a spatial region (REG1), is communicated to the GPU, which indicates for which pixels the one or more primary mapping functions (F_Y) respectively derived mapping functions are applicable. The derived coding of a spatial region REG1* will specify which of the original pixels of the primary software application are still visible, if e.g. OS GUI elements or other windows have been partially placed over them, etc. We assume full opaqueness, and more exotic transparent options may need additional functionality such as deriving a derived mapping function F_Y1*. This technique allows a nice split between the "where is geometrically positioned what", i.e. the shapes of the visual objects, and its more or lesser accurate colorimetric treatment.

Although one can also elect (and in a future probably will) to use standardized HDR color spaces, since HDR has some difficulty deploying based on its complexity, at least for the coming time using sRGB for the communication of the image content (i.e. what in graphics terms is often called the texture) will be a good option.

It is further advantageous if a pass-through control signal (C_PT) causes the secondary software to switch to a mode of not applying a luminance or luma mapping to the second color code triplets (RGB2) in the spatial region (REG1). There would already be benefit from communicating mapping functions to the GPU per se, so that it, as a last decider on which colors to display, unless it shares or passes that responsibility to a display itself (which are two modes of control: tight versus loose, or suggested, but which suggestion would still communicate the various mapping functions and their regions of applicability REG1*, REG2, ...), and some embodiments could still prefer to do some adjustment to the pixel color triplets per se (i.e. the sRGB values), although usually wanting to stay close to the versions made by the primary software application, however it is beneficial if what is made by the primary software application is not touched, so that it has its own (right) control of how its own colors are ultimately going to be displayed, at least approximately.

It is further advantageous if the computer has the secondary software arranged to create a set of tertiary color code triplets (RGB3), which are in a same color space representation as the secondary color code triplets (RGB2), and to create one or more secondary color mapping functions (F_Y2), and a coding of a second spatial region (REG2) of applicability of the one or more secondary color mapping functions (F_Y2), and to communicate via the third software the tertiary color code triplets (RGB3) to positions of the scanout buffer as indicated by the second spatial region (REG2), and to communicate the one or more secondary color mapping functions (F_Y2) to the GPU.

It is further advantageous if the computer has the GPU which has an output formatter (750) arranged to read according to a scan the final pixel colors of the scanout buffer (511), format them together with the one or more primary color mapping functions (F_Y1) and the derived coding of a spatial region (REG1*) into a display interface signal (DSIG), and communicate this display signal out to one or more displays connected via one or more video communication mechanisms (790).

Then displays can use this information to do their own final tweaks on the GUI composition, to the extent needed, which may be advantageous in some scenarios, but usually one would want the control in the GUI, and the displays passively displaying what is instructed (i.e. act as reference monitors, without doing any internal beautification).

In such opposite scenarios, the GPU has a display adaptation circuit (751) arranged to transform at least the one more primary mapping functions (F_Y) to yield display optimized functions (F_Yd) which are to be used by at least one of the connected displays to transform the secondary color code triplets (RGB2) as communicated via the one or more video communication mechanisms (790) into quaternary color code triplets (RGB4) which are optimized for the display in the sense that no quaternary color code triplets (RGB4) shall be a color which is not displayable by the respective display. How exactly it internally maintains the total canvas for more than one display, whether as a single entity or separate buffers is again a detail which given the possibilities of the present embodiments is an irrelevant detail to the understanding of the technical insights and elements. But what is important is that, based on the functions of which the shapes indicate how a re-grading would look good compared to any arbitrary re-grading being worse, the ultimate to be displayed images can be optimized at least to the various capabilities of the displays, and furthermore, since the processing happens in the GPU, so that a display with one maximum brightness capability can be coordinated with another one of different capability (e.g. the HDR display can be driven with image pixel colors by the GPU so that at least the LDR objects in an image look of similar brightness as on the SDR display, etc.). This could be done by re-coloring pixel brightnesses on the fly in the scanout buffer as a window is being dragged partially over to a new display.

Furthermore it can be quite beneficial if in embodiments the secondary software is further arranged to derive the one or more derived mapping functions (F_Y*) based on the primary color mapping functions (F_Y1) and the secondary color mapping functions (F_Y2). As explained above, the basic scenario would be not to touch the functions of any software application, as they also define the basic colors as were desired by that application, and the application should know what would look good. If another software, e.g. the OS, considers everything sufficient for its purposes, it can as explained define its colors in correspondence with the F_Y1 function (or functions), and therefore communicate it out to the GPU unchanged. If it is not happy with the function shape (as was the tertiary application in the example of Fig. 8, which wanted a separate function F_Y2 already because of the fact that F_Y1 didn't reach the 3000 nit upper level), it should normally define its own function, e.g. F_Y3, and communicate it separately to the GPU with the applicable region REG3.

However, there can be scenarios where some software, e.g. the OS, potentially under the control of the user (who e.g. indicates he does not want his movie overshouted by some commercial), may want to adapt at least some of the functions, to make them e.g. more coordinated with other functions. E.g. the OS could elect that, despite the commercial wanting to present 3000 nit blasting fireworks, which would distract the user, function derived secondary function F_Y2* should be communicated to the GPU, which is a scaled version of F_Y2, which ends at 2000 nit, or maybe even only 1500 or 1000 nit (or even just plain old SDR ending at 100 nit, i.e. an identity transform for the sRGB pixel colors of REG2).

It may also be advantageous to embody the various possible implementations in methods, which may be performed e.g. by software modules or components, or applications and the like (an the supply of various manners of coding of such methods):

A method running on a computer (700) running at least one primary software application (701), in which the primary software application is arranged to present for display visual assets of different brightness range, wherein the primary software application presents a first visual asset (702) which comprises pixels which have brightnesses lying within a first brightness range (DR_H);

  wherein the primary software application comprises a luma mapping (704) arranged to map a first color code triplet (RGB1) which codes a first brightness of a pixel (7201) to a corresponding second color code triplet (RGB2) which codes a second brightness for said pixel, by applying one or more primary mapping functions (F_Y) to the first color code triplet yielding the second color code triplet, wherein the second brightness is a brightness lying in a second brightness range (DR_L) of different size than the first brightness range;

  wherein the primary software application comprises a formatting (707) arranged to compose secondary color code triplets (RGB2) from the luma mapping into a first image data structure (IMDAT) for communicating to a secondary software (720), and communicate to the secondary software (720) the first image data structure (IMDAT) together with a coding of the one or more primary mapping functions (F_Y) and a coding of a spatial region (REG1) of applicability of the one or more primary mapping functions (F_Y);

  wherein the primary software application comprises a primary controller (710) arranged to output a pass-through control signal (C_PT) instructing to a secondary controller (722) in the secondary software (720) that the one or more primary mapping functions (F_Y), or one or more derived mapping functions (F_Y*) which are based on the one or more primary mapping functions (F_Y), should be passed to a tertiary software (740), which tertiary software is in control of supplying final pixel colors for a scanout buffer (511) of a graphics processing unit GPU (510), and wherein the tertiary software is arranged to pass the one or more primary mapping functions (F_Y) respectively one or more derived mapping functions (F_Y*) to the GPU.

The method running on a computer (700) in which at least a part of the scanout buffer is filled with a copy of the second color code triplets (RGB2) as specified in the first image data structure (IMDAT), and wherein a derived coding of a spatial region (REG1*), which is based on the coding of a spatial region (REG1), is communicated to the GPU, which indicates for which pixels the one or more primary mapping functions (F_Y) respectively derived mapping functions are applicable.

The method running on a computer (700) in which the second color code triplet (RGB2) is a standard dynamic range color coding, such as sRGB.

A method of determining in a software application colors of one or more visual assests comprising pixels having brightnesses in a high dynamic range (DR_H), comprising:

- luma mapping (704) arranged to map a first color code triplet (RGB1) which codes a first brightness of a pixel (7201) to a corresponding second color code triplet (RGB2) which codes a second brightness for said pixel, by applying one or more primary mapping functions (F_Y) to the first color code triplet yielding the second color code triplet, wherein the second brightness is a brightness lying in a second brightness range (DR_L) of different size than the high brightness range;

- formatting (707) arranged to compose secondary color code triplets (RGB2) from the luma mapping into a first image data structure (IMDAT) for communicating to a secondary software (720) which runs on a computer (700) which may be the same computer or a different computer from the one running the software application, and communicating to the secondary software (720) the first image data structure (IMDAT) together with a coding of the one or more primary mapping functions (F_Y) and a coding of a spatial region (REG1) of applicability of the one or more primary mapping functions (F_Y);

- outputting a pass-through control signal (C_PT) for indicating to a secondary controller (722) in the secondary software (720) that the one or more primary mapping functions (F_Y) should be passed to a graphics processing unit (510) of the computer (700).

A method applied by a secondary software running on a computer (700) of writing second color code triplets (RGB2) in a scanout buffer of a GPU (510), comprising:

- receiving from a primary software application the second color code triplets (RGB2) which together with also received one or more primary mapping functions (F_Y) define first color code triplets (RGB1) which define high dynamic range colors of pixels of a visual asset;
- receiving a pass-through control signal (C_PT) instructing to a secondary controller (722) in the secondary software (720) that the one or more primary mapping functions (F_Y) should be passed to the GPU, and that the second color code triplets (RGB2) should be written without modification in at least a derived region (REG1*) of a scanout buffer (511) of the GPU, and that a coding of the derived region (REG1*) should also be communicated to the GPU.

A method applied by a secondary software, wherein the secondary software determines third color code triplets (RGB3) for a different region than the derived region (REG1*), and communicates the third color code triplets (RGB3) and a one or more corresponding secondary color mapping functions (F_Y2) to the GPU and an coding of a second region (REG2) for which pixels of the scanout buffer those are applicable, wherein the third color code triplets (RGB3) are defined in a same color space as the second color code triplets (RGB2).

A method in which the secondary software is an operating system running on the computer (700).

BRIEF DESCRIPTION OF THE DRAWINGS

These and other aspects of the method and apparatus according to the invention will be apparent from and elucidated with reference to the implementations and embodiments described hereinafter, and with reference to the accompanying drawings, which serve merely as non-limiting specific illustrations exemplifying the more general concepts, and in which dashes are used to indicate that a component is optional, non-dashed components not necessarily being essential. Dashes can also be used for indicating that elements, which are explained to be essential, but hidden in the interior of an object, or for intangible things such as e.g. selections of objects/regions.

In the drawings:

Fig. 1 schematically explains various luminance dynamic range re-gradings, i.e. mappings between input luminances (typically specified to desire by a creator, human or machine, of the video or image content) and corresponding output luminances (of various image object pixels), of a number of steps or desirable images that can occur in a HDR image handling chain;

Fig. 2 schematically introduces (non-limiting) some typical examples of use scenarios of HDR video or image communication from origin (e.g. production) to usage (typically a home consumer);

Fig. 3 schematically illustrates how the brightness conversion and the corresponding conversion of the pixel chromas may work and how the pixel brightness histogram distributions of a lower and higher brightness, here specifically luminance, dynamic range corresponding image may look;

Fig. 4 shows schematically how computer representations of HDR images would represent a HDR range of image object pixel luminances;

Fig. 5 shows on a high level the concepts of the present application, how various applications may be dealing with the display of pixel colors via and/or in competition with all kinds of other software processes, which may not result in good or stable display behavior, certainly when several different displays are connected or connectable;

Fig. 6 shows an archetypical example of which user scenario, the user dealing with and looking at several HDR-capable web-applications in different windows occupying different areas of a same screen, may benefit from the current new technical approach and elements;

Fig. 7 shows schematically, and intermixed, a few possible embodiments of the present technology, on higher level;

Fig. 8 schematically shows what advantages of the present new framework are, and how the framework can operate on the brightness definitions for ultimate display;

Fig. 9 shows coarsely an example application working as a web browser;

Fig. 10 shows a first manner of display optimization, by which the GPU can determine an optimized derived brightness or luminance mapping curve on the basis of a received mapping curve from an application as per the present framework; and

Fig. 11 shows another possibility for such display optimization.

DETAILED DESCRIPTION OF THE EMBODIMENTS

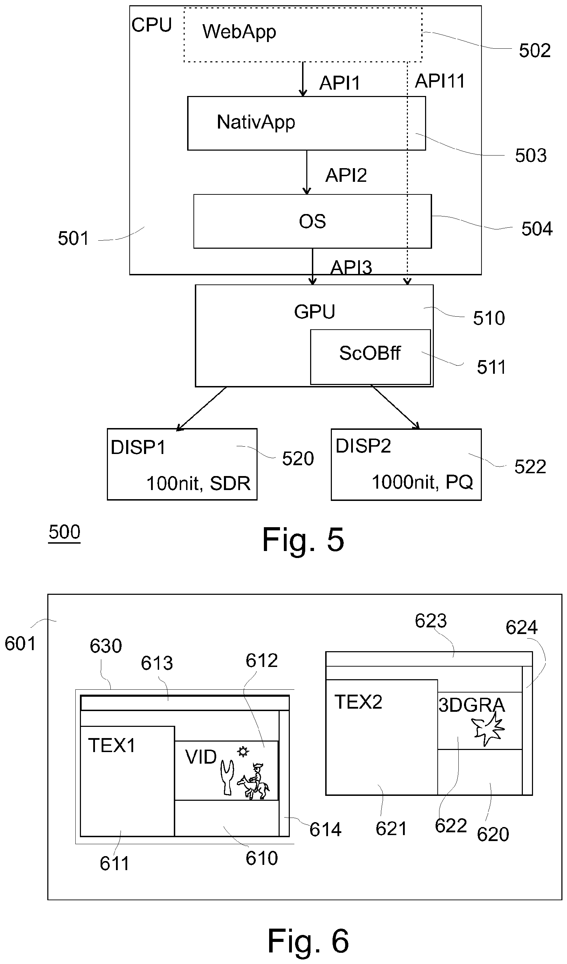

In **Fig. 5** we show generically (and schematically to the level of detail needed) a typical application scenario in which the current innovation embodiments would work. As this is currently becoming ever more popular, we show -from the client side system (500), which mirrors as a receiver the data, commands and the like which originated on the server side (not shown)- a <u>web application</u> (502). We have drawn the web application part dashed, since the issues and below embodiments can work mutatis mutandis for native applications (a "<u>native application</u>" is skilled person jargon for an application specifically written for, and running on, a local computer platform, such as a PC or mobile phone).

The web application could be e.g. an internet banking website, remote gaming, a video on demand site of e.g. Nexflix, etc. The web application will run as software on typically a central processing unit (CPU) 501. E.g., the composition of a web presentation may be received as HTML code. The web application will be to a large extent (for the user interaction) based on visual assets, such as e.g. text, or video.

In **Fig. 6** we have again generically (without wanting to be needlessly limiting) shown what the user would see on his one or more display screens, displaying a total viewable area or canvas (the screen buffer 601), containing two windows showing two such applications. The web application may have needs to show its assets in high dynamic range (i.e. better visual quality, in particular a range of brighter pixel luminances than SDR, and correct/controlled pixel luminances). E.g., it may show HDR still pictures showing more beautifully than with a plain SDR JPEG to let the customer browse through new available movies. Or it may want to present commercial material which is already in some HDR format (or vice versa, an old not yet HDR commercial asset, i.e. still in Rec. 709).

E.g., a first web application may present its content in a first window 610. The content of this window, may be on the one hand a first plain text 611 (i.e. graphics colors for standard text, which is well-representable in SDR, e.g. the colors black for the text on an "ivory" background). On the other hand, this webpage, which gets composed in the first window for the viewer, may also present a HDR video 612 (e.g. a video streamed in real time from a file location on another server, coded in HLG, and assuming 1000 nit would be a good level for presenting its brightest video pixel colors). This window could be side by side on a total canvas of the windowing server, which we will here call "<u>screen buffer</u>" (to discriminate from local canvases that windows may have). **Canvas** is a nomenclature from the technical field, which we shall use in this text to denote some geometrical area, of a set of N horizontal by M vertical pixels (or similarly a general object like an oval), in which we can specify ("write" or "draw") some final pixels, according to a pixel color representation (e.g. 3x8 bit R,G,B). Even if there was only one such window on the screen buffer, it could already partially project on a first display 520, and partially on a second display 522, e.g. when dragging that window across screens. If the screen buffer were to represent the pixels in one kind of color representation, e.g. SDR, then one of the challenging questions would already be how the second display, which is a HDR display, which expects PQ-defined YCbCr pixel color representations, and can display pixel colors as bright as its second display maximum luminance ML_D2 capability being 1000 nit (compared to first display maximum luminance ML_D1 capability being 100 nit) would display its part of the window. The viewer may find it at least weird or annoying if a white text background suddenly jumps from 100 nit to 1000 nit. Note that there will also be Graphical User Interface (GUI) widgets, such as first window top bar 613, and first window scroll bar 614. The <u>operating system</u> (OS, 504) may deal with such issues (although it sometimes also expects applications to deal with at least part of the GUI widgets, e.g. remove buttons when the application is in full screen, and re-display them upon an action such as clicking or hovering at the bottom of the screen, or showing the widgets partially transparent, etc.). Usually, at least for the moment, such widget graphics may be solely in SDR, but that may change in the near future.

In the second window 620 we show another web application. The two web applications may not know about each other (and then cannot coordinate colors or their brightnesses), but the local computer will (e.g. the windowing server application of the operating system). The second window, apart from its second window top bar 623 and second window scroll bar 624, may e.g. comprise a HDR 3D graphics 622 (say fireworks generated by some physical model, with very bright colors, illuminating a commercial), and in another area second text 621, which may now e.g. comprise very bright HDR text colors (e.g. defined on the Perceptual Quantizer scale, say non-linear R_PQ, G_PQ, B_PQ values). The various parts of the screen (windows, or parts of windows, background), may correspond to areas and their pixel sets, e.g. area tightly comprising all pixels related to the first window and nothing from the screen background (shown slightly larger to be visible).

Applications nowadays call functionality of other software (i.e. calculations or other actions that the other software processes can do) via <u>Application Programming Interface Specifications</u> **(API).** This hides the very different deep details of e.g. another software, or a hardware component like a GPU (like its specific machine code instructions that must be done). This works because there is universality in the tasks. E.g., the end user, or any upper layer application, doesn't care about how exactly a GPU gets the drawing of a line around a scroll bar done, just that it gets done. Also for HDR pixel colors, although there may be many flavors, at least the way in which e.g. a particular pastel yellow color of 750 nit gets defined and created (for ultimate display) at a certain pixel, just that this elementary action gets done. The same is true for a rendering pipeline, which usually always consists of e.g. defining triangles, putting these triangles at the correct pixel coordinates, interpolating the colors within the triangle, etc. (and it doesn't matter whether one processor does this, even running on the CPU, or 20 parallel processing cores on the GPU, and where and how they cache certain data, etc.).

At least in the SDR era this didn't matter, because SDR was just what it was, a simple universal manner to represent all colors between and projected around black and white. And a certain blue was a certain blue, and therefore GUI widget blue could be easily mixed (composed) with movie or still image blue, etc.

So e.g. the web application may specify some intentions regarding colors to use (e.g. for unimportant text, important text, and text that is being hovered over by the cursor), e.g. by using Cascaded Style Sheets (CSS), but it may rely for the rendering of all the colors, in a canvas, on a native application 503. Since applications may desire a well-contemplated and consistent design, CSS is a manner to separate the content (i.e. e.g. what is said in a news article's text) from the definition and communication of its presentation, such as its color palette. For web browsing this native application would be e.g. Edge, or Firefox, etc. So it may call some standard functionality via a first API (API1). The native application may do some preparing or processing on the colored text, but it may also rely on some functionality of the operating system by calling a second API (API2). But the operating system may, instead of doing some preparatory calculations on the CPU, and then simply write the resultant pixel colors in the VRAM of the GPU, also rely on the GPU to calculate the colors in the first place (e.g. calculate the fireworks by using some compute-shader). In any case, it may issue one or more function calls via third API (API3). In fact, modern universal graphical APIs like WebGPU, may have the web page already define calls for the GPU (fourth API API11). An example of a command in WebGPU is copyExternalImageToTexture(source, destination, copy Size), which copies the contents of a platform canvas or image to a destination texture. The various APIs may also query e.g. what the preferred color format of a canvas is (colors may be compressed according to some format to save on bus communication, needed VRAM), etc. The final buffer for colors of the screen to be shown, in the GPU 510, is the so-called ScanOut Buffer 511. From there the pixels as needed to be communicated to the display, e.g. over HDMI, are to be scanned, and formatted into the needed format (timing, signaling, etc.).

A first problem is that, although one may want to rely on other (layer) software for e.g. positioning and drawing a window, or capturing a mouse event, dynamic range conversion is far too complex, and quality-critical, to rely on other software components to do some probably fixed and simplistic luminance or luma mapping. The creator of the web page, or the commercial content running on it, may have spent far too much time making beautiful HDR colors, only to see them mapped with a very coarse luminance mapping, potentially even clipping away relevant information. If it was a simple color operation, such as the correction of a slight bluish tint, which would also not involve too severe differential errors or too different a look if not done appropriately, or at all, one could rely on a universal mechanism for doing that task, which could then be done anywhere in the chain. But color-critical HDR imagery has too many detail aspects to just handle it ad hoc.

Indeed, until recently, as a second problem the various applications might have defined various HDR colors (internally in their application space), but the <u>windowing servers</u> (e.g. the MS windows system) typically considered everything to be in the standard SDR color space **sRGB**. That was good for compositing any kind of SDR visual asset together. But an application having generated e.g. very colorful 750 nit fireworks, would need to luma map those to dull SDR firework colors, and then the windowing server would compose everything together on the screen buffer. So at best, if not already relying on the operating system, any application would need to convert its beautiful HDR visual content to sRGB visual assets, and also their would be no coordination with other application's assets. Furthermore, worst case there could be a cascade of various luma mappings in the various layers of software acting on top of each other, e.g. some of those involving SDR-to-HDR stretching, and all in an uncoordinated manner, ergo, one would have no idea of what came out displayed at the end, to the detriment of visual quality and pleasure of the viewer (e.g. (parts of) windows could be too dark, of insufficient contrast, if some pixels colors lay outside expected boundaries of some software some parts of the visual asset may have disappeared when displaying, etc.). Recently some windowing systems have introduced that applications can communicate to the window composition process canvases that can contain 16 bit floating point (so-called "half float") color components (and consequently luminances of those colors), however this only allows to basically communicate a large amount of colors (per se), but doesn't guarantee anything how these will be treated down the line, e.g. which luma mapping will be involved when the operating system makes the final composition of all visual assets, to correctly make the screen buffer, and ultimately the scanout buffer of the GPU. Note that how the screen buffer (especially if several displays are involved in an extended view) is exactly managed in one or more memory parts, with one or more API calls etc., is not critical to the present innovation embodiments. E.g., one display may refresh at higher rate than the other, and then its part of the total canvas will be read out more frequently. The innovation is about allowing the optimal coordination of the various parts the user ultimately gets to see, via the careful communications and attuned handling of the coordinated reference image representations (e.g. sRGB) and associated re-grading functions for defining HDR assets, and the coordinated use of it all when e.g. display adapting the final composition or part thereof.

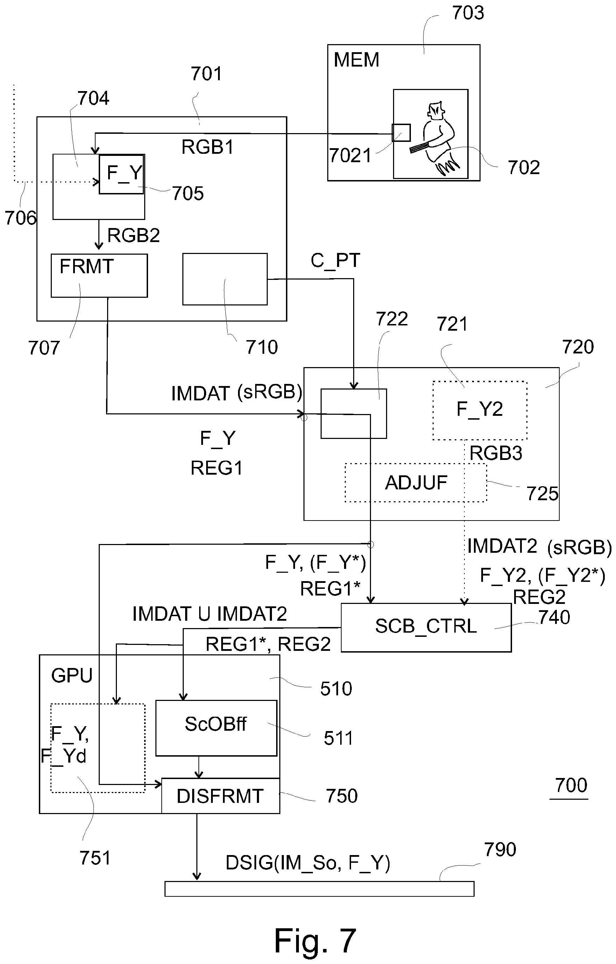

In **Fig. 7,** the primary software application 701 may obtain its visual asset e.g. from a memory 703. The (one, or more) function F_Y to be applied by the luma mapper 704 (which is arranged to map relative brightness codes, or absolute luminances, typically via their codes, or RGB values which indirectly but uniquely determine brightnesses respectively luminances, or HSV mappers, in which the value V represents the brightness, etc.) may either be internal, e.g. determined on the fly by the primary software application (and stored in an internal memory 705), or (as indicated by the dotted arrow indicating data communication channel 706) come from an external source. E.g., if the visual asset is a movie obtained over internet, the function F_Y may already have been determined by the creator of the movie, and it may be retrieved from metadata of the movie video signal as received.

The secondary software will always have the control functionality to enable the pass-through mode which at least instructs the pass-through of the function(s) F_Y (or somewhat modified typically shape-preserving derived functions F_Y*), and typically also instructs not to touch, or as little as possible, the e.g. sRGB-defined colors in the canvas image as received in the IMDAT. But some embodiments of that secondary software may also have internal functionality to determine their own image, and second mapping function F_Y2, and either communicate that separately (also in pass-through mode) to further software modules, or have a compositor to pass a mix image of the sRGB image of the primary software application and its own one or more visual assets, typically in the color space as instructed by the primary software application, i.e. e.g. always the universal sRGB color space. So the second software may have its own color mapping algorithm 721. In case of separate communication to the GPU, this may happen in a secondary image data representation (IMDAT2), but often the GPU will receive the already composited union of the two visual assets and their pixel colors (IMDAT U IMDAT2).

Advanced embodiments of the second software may have a function adjustment algorithm 725, to determine the adjusted function F_Y* based on F_Y for any of the visual assets (as e.g. in the commercial brightness mitigation example explained with the aid of Fig. 8, or other scenarios like advanced semi-transparent mixes of various assets, or more dynamic visual effects). The dotted box in the GPU, which is display adaptation circuit (751), will typically be present in future-proof GPUs, but in various scenarios its display adaptation may be on, in which case it will pass an optimal derived mapping function F_Yd to the display formatter 750 (and usually re-grade the pixel colors in the scanout buffer correspondingly, at least when it supplies over the video signal communication mechanism 790 (e.g. a cable, or wireless connection) fully pre-optimized images). In the other scenario, where it is off, simply the original function F_Y may be used, and in particular possibly communicated out to a display. The typical image signal DSIG out from the GPU onto the video signal communication mechanism 790 will comprise some image color planes (IM_So, e.g. coded as sRGB, or as PQ YCbCr or R'G'B' components), and at least a function F_Y, if one function is to be applied by a receiving display. Often the situation will already have been pre-optimized as regards the compositions, so the displays don't need to receive several local functions and their corresponding regions of application, but some embodiments of the GPU may communicate those too, e.g. for optimizing different windows in displays, for such displays which would be able to re-grade the various visual assets differently.

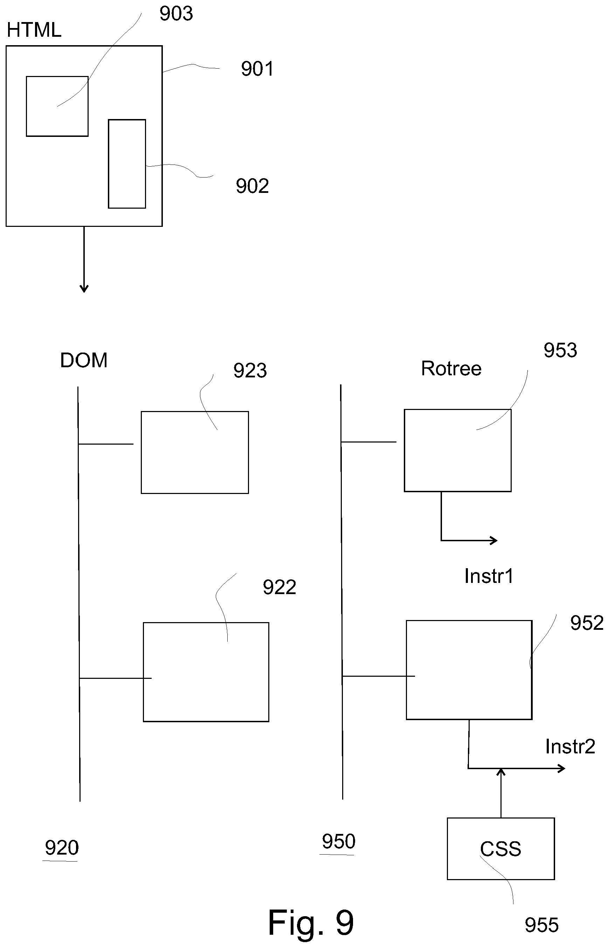

**Fig. 9** shortly elucidates what may happen in detail if the first software application is a HTML-based webpage running in a web browser. All data from the server side (i.e. the definition of e.g. the Netflix portal) comes in as an HTML file 901. It contains information (e.g. placement information, a link to a data source, etc.) of the various elements of the webpage, e.g. a movie 903 playing in-line on the webpage, and a region of colored text 902. This is first converted by the browser native application into a document object model (DOM) tree 920, which contains the separated (parsed) data in its own datastructures, model for the video 923, and model for the text 902. Then a so-called renderObject tree is constructed (950), which will instruct to typically the operating system how to draw and color the various pixels of e.g. the text. The video object will have a video renderObject 953, which instructs via first instructions Instr1 that the pixel colors of the video should e.g. be converted to PQ, or sRGB, according to algorithm x, y, or z. The operating system can then deal with these colors, typically in a canvas associated with them, on its own. In case a separate video instance mapping function F_Yv is needed for this region, such a function communication can be added as a dedicated API call (otherwise e.g. at the end an overall function can be communicated). Colors of the webpage may have been communicated via the mechanism of Cascading Style Sheets. The text renderObject 952 may when instructing its second instructions Instr2 apply the principles of CSS, and the predefined HDR colors for e.g. header text versus body text, etc. CSS typically uses a number of drawing passes to draw the background color, and objects of it. This may now happen e.g. in the screen buffer of the operating system, e.g. as corresponding sRGB colors, which is then as explained above passed to the GPU. Or it may happen in a temporary intermediate canvas, and then the operating system may later copy it to the screen buffer, and pass to the GPU. Various intermediate buffers may temporarily exist to store the results of complex rendering and/or coloring algorithms. Visual assets that are passed in separate processes may in a future be coordinated more via the present elucidated approaches (keep some of the re-gradability, via the communicated associated functions to the last level(s) of processing).

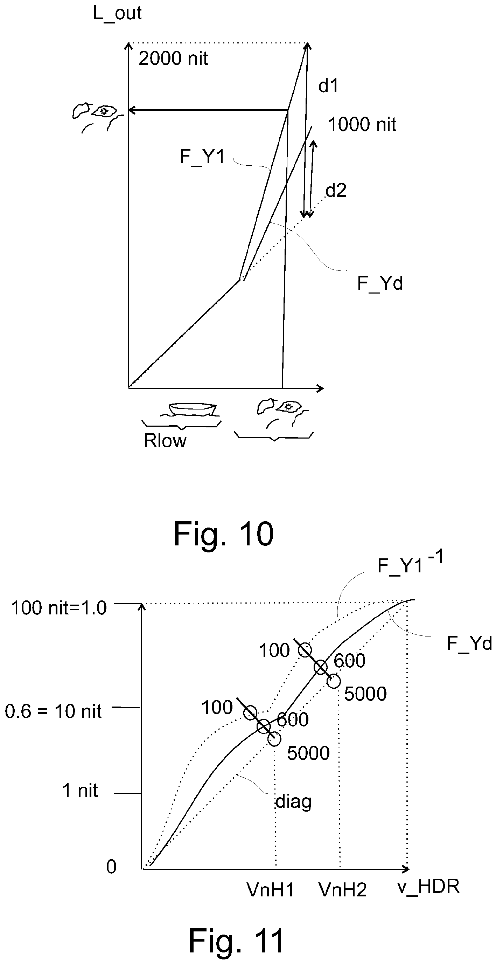

**Figs. 10 and 11** show some of the benefits of image display control via this mechanism. If we go back to the Fig. 8 example of the video and the commercial visual assets in their respective window locations (REG1, REG2), we can wonder what should happen to a video that becomes as bright as 2000 nit for at least some pixels at some time instants, and a commercial, maybe a still image, that wants to display pixels as bright as 3000 nit, if the user has connected a display which is only as bright as 600 nit.

To make it more interesting, let's say in a screen casting application the primary display is a mobile phone with an impressive first display maximum luminance of 1500 nit, but with small size, so the user wants to cast to a cheap (though with HDR image receiving, decoding and displaying technology on board) 100 nit second display maximum luminance monitor, which is large and has 4K spatial resolution though. The component directly communicating output video to the displays (e.g. both over HDMI in PQ format, although the PQ-luma defined luminances for the SDR monitor will only go as high as 100 nit) will be the GPU, and with the present control mechanism it can decide how to optimize for both screens. And moreover, since it may have two separate and different functions for the two visual assets, it can optimize both visuals of those regions to be displayed optimally, not just on the capabilities of the display, but also on other properties, such as e.g. the re-grading desiderata as encoded in the function shape, and potential further parameters indicated to or available at the GPU, such as a user brightness setting which may e.g. lower the commercial mapping curve F_Ycc to as explained above, or in any manner affecting the shape of that curve (e.g. dimming the brightest subrange output luminances for birght sRGB values (BR_in) by a factor 3, yet the middle ones only by 1.5, and leaving the darkest ones unchanged).

The GPU may apply its own final mapping function F_Yd (shown as one of the alternative manners of behavior of the GPU in Fig. 7) as determined by some internal algorithm to obtain from the e.g. sRGB values as received, put that in the scanout buffer (e.g. as final sRGB values; note: in various actual implementations there may actually be a separate front and back buffer, so one of them can be re-optimized while the other gets continuously displayed by a communicated video signal), and those colors will form the image for the e.g. 1500 nit internal display of the mobile phone, or a 600 nit display getting no pixel brighter than 600 nit in its communicated image etc.

Let's say it communicates two regions of screen coverage for the two displays, with a signaling which is derived from the sRGB values in the scanout buffer, e.g. to the internal display as a PQ signal, and to the monitor as a rec. 709 signal. The rec. 709 signal may be fully pre-optimized, hence that monitor need no longer get any mapping function metadata instructing or guiding luminance mapping internal to the monitor.

The HDR (internal in this example, or external) display may in fact also be getting a rec. 709 SDR video signal (i.e. for the YCbCr pixel color planes), but it may also get an optimized mapping function from the GPU, e.g. F_Yd. It can then with this function re-optimize the commonly received SDR colors to its capability. This variant can work on e.g. a sole commonly received wifi-communicated version of the screen casted, or screen duplicated image for displaying the same screen at least geometrically (not necessarily exactly the same colorimetrically) on two screens. If the total scanout buffer canvas for two side to side monitors is defined e.g. in PQ, the values for the lower maximum display luminance left monitor can be communicated out over cable in PQ format at lower luma values than for the right higher max luminance capability monitor (re-processed by the GPU, by applying display adaptation as explained next).

So various options are possible under the present framework, depending on what level of control one wants to give to the GPU, and what one still may expect from connected displays.

**Fig. 10** gives a first example of a possible algorithm to do display adaptation (a.k.a. display optimization). Irrespective of the manner of communication, lets say we have only one HDR display connected, and we need to supply it with optimized image pixel luminances (e.g. co-communicated over HDMI as final, ready to directly display PQ lumas). The GPU needs to establish a new mapping function F_Yd, but on the basis of the received mapping function for that visual asset and its area. This is because the shape of the function was optimized for what the various image objects, and their corresponding luminance sub-ranges respectively luma sub-ranges, need as optimal re-grading to a smaller or larger output range. If one uses an algorithm that moves points on the input curve (F_Y1) closer to the diagonal, one can so obtain points defining the locus of the output function i.e. the GPUs derived mapping function F_Yd. This derived mapping function F_Yd can be used to -on the e.g. sRGB color values as input- calculate the fully optimized display adapted output image for communicating from the GPU over the video communication mechanism to the display to be directly (without further color mapping) displayed.

Such a first exemplary algorithm will leave all identity mapped points where they were, and one can e.g. from the upper identity point simply draw a line to the new needed maximum luminance (here 1000 nit), and then one gets the upper part of the F_Yd function.

**Fig. 11** shows a more advanced example of display adaptation, employing a metric approach to the needed maximum output luminance, and diagonal projection to the diagonal. Of course other algorithms may also do, as this is again a detail of the framework: as long as some good images are communicated from the GPU to the display, whether or not co-associated with mapping functions in metadata for deriving re-graded images in the displays.

Here we show a display optimized re-grading, i.e. the derivation of the derived function F_Yd therefore, starting from HDR luminances. We may map those psychovisually uniformly by using a suitable OETF, and then we normalize to 1.0 as maximum, giving the various v_HDR input lumas of pixels (note, this color space representation may also be the common format in the scanout buffer, and the various pass-through communications, in some embodiments if so desired).

On the vertical axis all possible SDR luminances (i.e. typically by standard agreement up to 100 nit) are also represented normalized. One now positions scaled versions of a metric, at all points on the diagonal (corresponding by vertical down-projection to input lumas, e.g. first input luma vnH1, respectively second input luma vnH2). One rotates those scaled metrics so that they are orthogonal to the 45 degree diagonal (diag), and pointing upwards. The point on the diagonal corresponds to the maximum luminance of the HDR common representation, e.g. 5000 nit. All the points on the scaled diagonals which lie on the locus of the input function $F\_Y1^{-1}$(which HDR-to-LDR mapping function would be the inverse of the mapping function as received from the primary software application for upgrading to HDR, and passed through and communicated to the GPU, or in other words, it would be the function that the primary software application used to convert its HDR colors of its visual asset to the sRGB SDR colors) will correspond to the respective 100 nit positions on the respective scaled metrics. One can then determine a position on those respective metrics for e.g. a 600 nit display. The distances to the 5000 nit and 100 nit points will be weighed by a pre-fixed standard equation, e.g. preferably calculating the distances logarithmically. All the 600 nit points together will form the locus of the display-adapted output mapping function, i.e. the GPU-derived function F_Yd.

Other display adaptation algorithms can of course also be used, as long as a function results, and a brightness-adapted image by applying that function to the input image. Note that the OS and the GPU could agree to do the display adaptation under control of the OS. The functions for mapping the chromas corresponding to a luma or luminance mapping can also be determined in various manners, but one simple and good manner is to establish a linear multiplier equal to the output luminance divided by the input luminance (or the output percentual linear brightness divided by the input percentual linear brightness), and then after converting to the format of the chromas use this as a multiplicative corrector (e.g. if the OETF is a square root, one will take the square root of the division-based multiplier to act as the final multiplier). The further details of this are far beyond the scope needed for understanding the present contribution to the art of color control for display in computers and computer environments.

The second software can use similar principles to obtain its derived functions.

Note that the regions such as REG1 will typically tightly overlap with where the visual assets are to be presented, but one can also define different regions, e.g. by splitting a visual asset in two subregions, etc.

The algorithmic components disclosed in this text may (entirely or in part) be realized in practice as hardware (e.g. parts of an application specific integrated circuit) or as software running on a special digital signal processor, or a generic processor, etc. At least some of the elements of the various embodiments may be running on a fixed or configurable CPU, GPU, Digital Signal Processor, FPGA, Neural Processing Unit, Application Specific Integrated Circuit, microcontroller, SoC, etc. The images may be temporarily or for long term stored in various memories, in the vicinity of the processor(s) or remotely accessible e.g. over the internet.

It should be understandable to the skilled person from our presentation which components may be optional improvements and can be realized in combination with other components, and how (optional) steps of methods correspond to respective means of apparatuses, and vice versa. Some combinations will be taught by splitting the general teachings to partial teachings regarding one or more of the parts. The word "apparatus" in this application is used in its broadest sense, namely a group of means allowing the realization of a particular objective, and can hence e.g. be (a small circuit part of) an IC, or a dedicated appliance (such as an appliance with a display), or part of a networked system, etc. "Arrangement" is also intended to be used in the broadest sense, so it may comprise inter alia a single apparatus, a part of an apparatus, a collection of (parts of) cooperating apparatuses, etc.

The computer program product denotation should be understood to encompass any physical realization of a collection of commands enabling a generic or special purpose processor, after a series of loading steps (which may include intermediate conversion steps, such as translation to an intermediate language, and a final processor language) to enter the commands into the processor, and to execute any of the characteristic functions of an invention. In particular, the computer program product may be realized as data on a carrier such as e.g. a disk, data present in a memory, data travelling via a network connection -wired or wireless- . Apart from program code, characteristic data required for the program may also be embodied as a computer program product. Some of the technologies may be encompassed in signals, typically control signals for controlling one or more technical behaviors of e.g. a receiving apparatus, such as a television. Some circuits may be reconfigurable, and temporarily configured for particular processing by software. Some parts of the apparatuses may be specifically adapted to receive, parse and/or understand innovative signals.

Some of the steps required for the operation of the method may be already present in the functionality of the processor instead of described in the computer program product, such as data input and output steps.

It should be noted that the above-mentioned embodiments illustrate rather than limit the invention. Where the skilled person can easily realize a mapping of the presented examples to other regions of the claims, we have for conciseness not mentioned all these options in-depth. Apart from combinations of elements of the invention as combined in the claims, other combinations of the elements are possible. Any combination of elements can in practice be realized in a single dedicated element, or split elements.

Any reference sign between parentheses in the claim is not intended for limiting the claim. The word "comprising" does not exclude the presence of elements or aspects not listed in a claim. The word "a" or "an" preceding an element does not exclude the presence of a plurality of such elements, nor the presence of other elements.

**Claims**

1. A computer (700) running at least one primary software application (701), in which the primary software application is arranged to present for display visual assets of different brightness range, wherein the primary software application presents a first visual asset (702) which comprises pixels which have brightnesses lying within a first brightness range (DR_H);

wherein the primary software application comprises a luma mapping (704) arranged to map a first color code triplet (RGB1) which codes a first brightness of a pixel (7201) to a corresponding second color code triplet (RGB2) which codes a second brightness for said pixel, by applying one or more primary mapping functions (F_Y) to the first color code triplet yielding the second color code triplet, wherein the second brightness is a brightness lying in a second brightness range (DR_L) of different size than the first brightness range;

wherein the primary software application comprises a formatting (707) arranged to compose secondary color code triplets (RGB2) from the luma mapping into a first image data structure (IMDAT) for communicating to a secondary software (720), and communicate to the secondary software (720) the first image data structure (IMDAT) together with a coding of the one or more primary mapping functions (F_Y) and a coding of a spatial region (REG1) of applicability of the one or more primary mapping functions (F_Y);

wherein the primary software application comprises a primary controller (710) arranged to output a pass-through control signal (C_PT) instructing to a secondary controller (722) in the secondary software (720) that the one or more primary mapping functions (F_Y), or one or more derived mapping functions (F_Y*) which are based on the one or more primary mapping functions (F_Y), should be passed to a tertiary software (740), which tertiary software is in control of supplying final pixel colors for a scanout buffer (511) of a graphics processing unit GPU (510), and wherein the tertiary software is arranged to pass the one or more primary mapping functions (F_Y) respectively one or more derived mapping functions (F_Y*) to the GPU.

2. The computer (700) as claimed in claim 1, in which at least a part of the scanout buffer is filled with a copy of the second color code triplets (RGB2) as specified in the first image data structure (IMDAT), and wherein a derived coding of a spatial region (REG1*), which is based on the coding of a spatial region (REG1), is communicated to the GPU, which indicates for which pixels the one or more primary mapping functions (F_Y) respectively derived mapping functions are applicable.

3. The computer (700) as claimed in claim 1 or 2, in which the second color code triplet (RGB2) is a standard dynamic range color coding, such as sRGB.

4. The computer (700) as claimed in one of the above claims, wherein the pass-through control signal (C_PT) instructs the secondary software to switch to a mode of not applying a luminance or luma mapping to the second color code triplets (RGB2) in the spatial region (REG1).

5. The computer (700) as claimed in one of the above claims, wherein the secondary software is arranged to create a set of tertiary color code triplets (RGB3), which are in a same color space representation as the secondary color code triplets (RGB2), and to create one or more secondary color mapping functions (F_Y2), and a coding of a second spatial region (REG2) of applicability of the one or more secondary color mapping functions (F_Y2), and to communicate via the third software the tertiary color code triplets (RGB3) to positions of the scanout buffer as indicated by the second spatial region (REG2), and to communicate the one or more secondary color mapping functions (F_Y2) to the GPU.

6. The computer (700) as claimed in one of the above claims, wherein the GPU has an output formatter (750) arranged to read according to a scan the final pixel colors of the scanout buffer (511), format them together with the one or more primary color mapping functions (F_Y1) and the derived coding of a spatial region (REG1*) into a display interface signal (DSIG), and communicate this display signal out to one or more displays connected via one or more video communication mechanisms (790).

7. The computer (700) as claimed in one of the above claims, wherein the GPU has a display adaptation circuit (751) arranged to transform at least the one more primary mapping functions (F_Y) to yield display optimized functions (F_Yd) which are to be used by at least one of the connected displays to transform the secondary color code triplets (RGB2) as communicated via the one or more video communication mechanisms (790) into quaternary color code triplets (RGB4) which are optimized for the display in the sense that no quaternary color code triplets (RGB4) shall be a color which is not displayable by the respective display.

8. The computer (700) as claimed in claim 5, wherein the secondary software is further arranged to derive the one or more derived mapping functions (F_Y*) based on the primary color mapping functions (F_Y1) and the secondary color mapping functions (F_Y2).

9. A method running on a computer (700) running at least one primary software application (701), in which the primary software application is arranged to present for display visual assets of different brightness range, wherein the primary software application presents a first visual asset (702) which comprises pixels which have brightnesses lying within a first brightness range (DR_H);

wherein the primary software application comprises a luma mapping (704) arranged to map a first color code triplet (RGB1) which codes a first brightness of a pixel (7201) to a corresponding second color code triplet (RGB2) which codes a second brightness for said pixel, by applying one or more primary mapping functions (F_Y) to the first color code triplet yielding the second color code triplet, wherein the second brightness is a brightness lying in a second brightness range (DR_L) of different size than the first brightness range;

wherein the primary software application comprises a formatting (707) arranged to compose secondary color code triplets (RGB2) from the luma mapping into a first image data structure (IMDAT) for communicating to a secondary software (720), and communicate to the secondary software (720) the first image data structure (IMDAT) together with a coding of the one or more primary mapping functions (F_Y) and a coding of a spatial region (REG1) of applicability of the one or more primary mapping functions (F_Y);

wherein the primary software application comprises a primary controller (710) arranged to output a pass-through control signal (C_PT) instructing to a secondary controller (722) in the secondary software (720) that the one or more primary mapping functions (F_Y), or one or more derived mapping functions (F_Y*) which are based on the one or more primary mapping functions (F_Y), should be passed to a tertiary software (740), which tertiary software is in control of supplying final pixel colors for a scanout buffer (511) of a graphics processing unit GPU (510), and wherein the tertiary software is arranged to pass the one or more primary mapping functions (F_Y) respectively one or more derived mapping functions (F_Y*) to the GPU.

10. The method running on a computer (700) as claimed in claim 9, in which at least a part of the scanout buffer is filled with a copy of the second color code triplets (RGB2) as specified in the first image data structure (IMDAT), and wherein a derived coding of a spatial region (REG1*), which is based on the coding of a spatial region (REG1), is communicated to the GPU, which indicates for which pixels the one or more primary mapping functions (F_Y) respectively derived mapping functions are applicable.

11. The method running on a computer (700) as claimed in claim 9 or 10, in which the second color code triplet (RGB2) is a standard dynamic range color coding, such as sRGB.

12. A method of determining in a software application colors of one or more visual assests comprising pixels having brightnesses in a high dynamic range (DR_H), comprising:

- luma mapping (704) arranged to map a first color code triplet (RGB1) which codes a first brightness of a pixel (7201) to a corresponding second color code triplet (RGB2) which codes a second brightness for said pixel, by applying one or more primary mapping functions (F_Y) to the first color code triplet yielding the second color code triplet, wherein the second brightness is a brightness lying in a second brightness range (DR_L) of different size than the high brightness range;

- formatting (707) arranged to compose secondary color code triplets (RGB2) from the luma mapping into a first image data structure (IMDAT) for communicating to a secondary software (720) which runs on a computer (700) which may be the same computer or a different computer from the one running the software application, and communicating to the secondary software (720) the first image data structure (IMDAT) together with a coding of the one or more primary mapping functions (F_Y) and a coding of a spatial region (REG1) of applicability of the one or more primary mapping functions (F_Y);

- outputing a pass-through control signal (C_PT) for indicating to a secondary controller (722) in the secondary software (720) that the one or more primary mapping functions (F_Y) should be passed to a graphics processing unit (510) of the computer (700).

13. A method applied by a secondary software running on a computer (700) of writing second color code triplets (RGB2) in a scanout buffer of a GPU (510), comprising:

- receiving from a primary software application the second color code triplets (RGB2) which together with also received one or more primary mapping functions (F_Y) define first color code triplets (RGB1) which define high dynamic range colors of pixels of a visual asset;

- receiving a pass-through control signal (C_PT) instructing to a secondary controller (722) in the secondary software (720) that the one or more primary mapping functions (F_Y) should be passed to the GPU, and that the second color code triplets (RGB2) should be written without modification in at least a derived region (REG1*) of a scanout buffer (511) of the GPU, and that a coding of the derived region (REG1*) should also be communicated to the GPU.

**14.** A method applied by a secondary software, wherein the secondary software determines third color code triplets (RGB3) for a different region than the derived region (REG1*), and communicates the third color code triplets (RGB3) and a one or more corresponding secondary color mapping functions (F_Y2) to the GPU and an coding of a second region (REG2) for which pixels of the scanout buffer those are applicable, wherein the third color code triplets (RGB3) are defined in a same color space as the second color code triplets (RGB2).

**15.** A method as claimed in claim 13 or 14 in which the secondary software is an operating system running on the computer (700).

**16.** Code for one of the above method claims.

Fig. 1 A

Fig. 1B

Fig. 1D

Fig. 1C

Fig. 1

EP 4 568 235 A1

Fig. 2

Fig. 3A

Fig. 3B

Fig. 3C

Fig. 3

6,000,000 nit

60,000x

5x, 20x

1.0

Fig. 4

Fig. 5

Fig. 6

Fig. 7

Fig. 8A

Fig. 8B

Fig. 8C

**Fig. 8**

Fig. 9

Fig. 10

Fig. 11

# EUROPEAN SEARCH REPORT

**Application Number**

EP 23 21 4769

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Rod Lawton: "Local adjustments explained - Life after Photoshop", , 10 March 2022 (2022-03-10), XP093167873, Retrieved from the Internet: URL:https://www.lifeafterphotoshop.com/local-adjustments-explained/ [retrieved on 2024-05-28] | 1,3,5-9, 11-16 | INV. H04N1/56 H04N1/60 G09G5/02 G06T5/90 G09G5/10 H04N1/64 H04N9/68 |
| Y | * pages 1-9 * | 2,4,10 | H04N19/00 H04N19/46 |
| Y | Victoria Bampton: "Lightroom Performance - Previews & Caches ¦ The Lightroom Queen", , 1 June 2021 (2021-06-01), XP093167863, Retrieved from the Internet: URL:https://www.lightroomqueen.com/lightroom-performance-previews-caches/ [retrieved on 2024-05-28] * page 2 * | 2,4,10 | H04N21/84 |
| A | US 10 687 080 B2 (ARRIS ENTPR LLC [US]) 16 June 2020 (2020-06-16) * column 4, lines 25-48 * | 1-15 | |
| A | DAI MIN (MAGGIE) ET AL: "An overview of end-to-end HDR", PROCEEDINGS OF SPIE; [PROCEEDINGS OF SPIE ISSN 0277-786X VOLUME 10524], SPIE, US, vol. 10752, 17 September 2018 (2018-09-17) , pages 107520Z-107520Z, XP060110666, DOI: 10.1117/12.2322600 ISBN: 978-1-5106-1533-5 * the whole document * | 1-15 | |

**TECHNICAL FIELDS SEARCHED (IPC)**

G09G
G06T
H04N

The present search report has been drawn up for all claims

| Place of search | Date of completion of the search | Examiner |
|---|---|---|
| Munich | 29 May 2024 | Demin, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 4769

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2024

| Patent document cited in search report | | Publication date | Patent family member(s) | | Publication date |
|---|---|---|---|---|---|
| US 10687080 | B2 | 16-06-2020 | EP | 3329673 A1 | 06-06-2018 |
| | | | JP | 6530554 B2 | 12-06-2019 |
| | | | JP | 2018528666 A | 27-09-2018 |
| | | | KR | 20180038471 A | 16-04-2018 |
| | | | KR | 20200079573 A | 03-07-2020 |
| | | | KR | 20220040508 A | 30-03-2022 |
| | | | KR | 20230066493 A | 15-05-2023 |
| | | | US | 2017064334 A1 | 02-03-2017 |
| | | | US | 2020275126 A1 | 27-08-2020 |
| | | | US | 2023171429 A1 | 01-06-2023 |
| | | | WO | 2017040237 A1 | 09-03-2017 |

EPO FORM P0459

For more details about this annex : see Official Journal of the European Patent Office, No. 12/82

**EP 4 568 235 A1**

**Patent documents cited in the description**

- WO 2017157977 A

- WO 2017108906 A